# EUROPÄISCHE PATENTSCHRIFT

(11) **EP 0 268 198 B1**
(45) Veröffentlichungstag und Bekanntmachung des Hinweises auf die Patenterteilung: **01.09.1993**
(21) Anmeldenummer: 87116650.0
(22) Anmeldetag: 11.11.1987
(51) Int. Cl.: C09K 19/20, C09K 19/34, C09K 19/42, C09K 19/44, C09K 19/46

(54) **Ferroelektrische Flüssigkristalle**
Ferroelectric liquid crystals
Cristaux liquides ferroélectriques

(30) Priorität: 20.11.1986 CH 4649/86; 10.09.1987 CH 3505/87
(43) Veröffentlichungstag der Anmeldung: 25.05.1988
(73) Patentinhaber: F. HOFFMANN-LA ROCHE AG, 4002 Basel (CH)
(72) Erfinder: Boller, Arthur, Dr., CH-4102 Binningen (CH); Buchecker, Richard, Dr., CH-8008 Zürich (CH); Fromm, Hans-Jürgen, Dr., D-7850 Lörrach (DE); Kelly, Stephen, Dr., CH-4313 Möhlin (DE); Schadt, Martin, Dr., CH-4411 Seltisberg (CH); Villiger, Alois, Dr., CH-4055 Basel (CH)
(74) Vertreter: Cottong, Norbert A.

(56) Entgegenhaltungen:
- EP-A- 0 122 389
- EP-A- 0 167 912
- EP-A- 0 168 683
- EP-A- 0 248 335
- WO-A-86/06373
- CHEMICAL ABSTRACTS, Band 101, Nr. 6, 6. August 1984, Seite 7, Nr. 38943b, Columbus, Ohio, US; H. FINKELMANN et al.: "Liquid crystalline side chain polymers. Cholesteric homopolymers"
- PATENT ABSTRACTS OF JAPAN, band 12, Nr. 263 (C-514)[3110], 22. Juli 1988; & JP-A-63 048 246

## Beschreibung

Die vorliegende Erfindung betrifft die Verwendung eines flüssigkristallinen Gemisches mit ferroelektrischen Eigenschaften, deren Verwendung für ferroelektrische elektro-optische Zwecke und neue Verbindungen für diese Gemische.

Flüssige Kristalle werden vor allem als Dielektrika in Anzeigevorrichtungen eingesetzt, da die optischen Eigenschaften solcher Substanzen durch eine angelegte Spannung beeinflusst werden können. Elektro-optische Vorrichtungen auf der Basis von Flüssigkristallen sind dem Fachmann gut bekannt und können auf verschiedenen Effekten beruhen, wie beispielsweise der dynamischen Streuung, der Deformation aufgerichteter Phasen (DAP-Zelle), dem Schadt-Helfrich-Effekt (TN-Zelle [twisted-nematic] und STN-Zelle [super twisted-nematic]), dem Gast/Wirt-Effekt (Guest/Host-Zelle), einem cholesterisch-nematischen Phasenübergang (Phase-Change-Zelle) oder dem SBE-Effekt (super birefringence effect). Die Ansprechzeiten solcher Anzeigevorrichtungen liegen im allgemeinen in der Grössenordnung von mehreren Millisekunden oder höher.

Es wurde kürzlich gefunden, dass die Ansprechgeschwindigkeiten deutlich verbessert werden können durch Verwendung von Anzeigevorrichtungen auf der Basis von Flüssigkristallen mit ferroelektrischen Eigenschaften. Hierbei können grundsätzlich verschiedene chirale smektische Flüssigkristalle mit ferroelektrischen Eigenschaften verwendet werden, wie beispielsweise Flüssigkristalle mit smektisch C, F oder I Phasen. Als besonders geeignet haben sich jedoch Flüssigkristalle mit chiralen smektisch C Phasen erwiesen. Solche chiralen Verbindungen sind beispielsweise in WO-A-8 606 373 beschrieben.

Es sind bisher vergleichsweise wenig Flüssigkristalle mit ferroelektrischen Eigenschaften bekannt. Zudem besitzen die bekannten Flüssigkristalle häufig eine ungenügende chemische und thermische Stabilität oder nur relativ enge oder bei hohen Temperaturen liegende chirale smektische Phasen. Es besteht daher ein grosser Bedarf an weiteren geeigneten Materialien insbesondere im Hinblick auf die weitere Verbesserung ferroelektrischer Flüssigkristallgemische.

Gegenstand der vorliegenden Erfindung ist die Verwendung eines flüssigkristallinen Gemisches enthaltend mindestens 2 Komponenten, dadurch gekennzeichnet, dass mindestens eine Komponente eine Verbindung der allgemeinen Formel 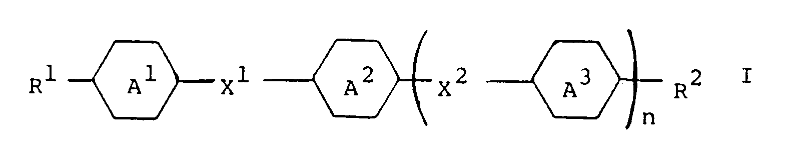
worin n für die Zahl 0 oder 1 steht; X¹ eine einfache Kovalenzbindung, -COO- oder -OOC- und X² eine einfache Kovalenzbindung, -COO-, -OOC-, -CH₂CH₂-, -OCH₂- oder -CH₂O- darstellen; die Ringe A¹, A² und A³ unabhängig voneinander unsubstituiertes oder mit Cyano, Halogen oder Niederalkyl substituiertes 1,4-Phenylen oder einer der Ringe auch Pyrimidin-2,5-diyl oder Pyrazin-2,5-diyl bedeutet und/oder, wenn n für die Zahl 1 steht, einer der Ringe auch trans-1,4-Cyclohexylen oder trans-m-Dioxan-2,5-diyl bedeutet; mit der Massgabe, dass einer der vorhandenen Ringe für Pyrimidin-2,5-diyl oder Pyrazin-2,5-diyl steht, wenn ein weiterer Ring trans-1,4-Cyclohexylen bedeutet oder, wenn n für die Zahl 0 und X¹ für eine einfache Kovalenzbindung stehen; R¹ eine gegebenenfalls halogensubstituierte Alkenylgruppe mit bis zu 18 Kohlenstoffatomen bedeutet, worin gegebenenfalls 1 oder 2 nicht benachbarte CH₂-Gruppen durch -O- ersetzt sind und/oder gegebenenfalls eine C-C-Einfachbindung durch eine C-C-Doppelbindung ersetzt ist; mit der Massgabe, dass R¹ von 3,7-Dimethyl-6-octenyloxy (Citronellol-Aether) verschieden ist; R² eine gegebenenfalls halogensubstituierte Alkylgruppe mit bis zu 18 Kohlenstoffatomen bedeutet, worin gegebenenfalls 1 oder 2 nicht benachbarte CH₂-Gruppen durch -O- ersetzt sind und/oder gegebenenfalls eine C-C-Einfachbindung durch eine C-C-Doppelbindung ersetzt ist; mit der Massgabe, dass an einen aromatischen Ring gebundene Reste R¹ und/oder R² mindestens 2 Kettenatome zwischen dem aromatischen Ring und einer vorhandenen C-C-Doppelbindung aufweisen,
ist, für ferroelektrische elektro-optische Anzeigen.

Ein bevorzugter Aspekt betrifft die Verwendung von optisch aktiven Verbindungen der Formel I, worin mindestens einer der Reste R¹ und R² ein chirales Kohlenstoffatom aufweist. Weitere bevorzugt verwendete Verbindungen der Formel I sind diejenigen, welche in R¹ und R² zusammen im Falle von n = 1 mindestens 8, insbesondere mindestens 10 und besonders bevorzugt mindestens 12 Kettenatome und im Falle von n = 0 mindestens 10, insbesondere mindestens 12 und besonders bevorzugt mindestens 14 Kettenatom (d.h. Kohlenstoff und gegebenenfalls Sauerstoffatome) in unverzweigter Kette aufweisen.

Es wurde gefunden, dass die Anwesenheit einer oder mehrerer Doppelbindungen gegebenenfalls in Kombination mit einem oder mehreren chiralen Kohlenstoffatomen in den Seitenketten der Verbindungen der obigen Formel I die ferroelektrischen Eigenschaften und insbesondere die Ausbildung von chiralen smektisch C Phasen fördert. Ueber der chiral smektischen Phase liegende flüssigkristalline Phasen werden durch die Anwesenheit einer Doppelbindung häufig weitgehend unterdrückt. Ferner werden im allgemeinen die Schmelzpunkte gesenkt und hochgeordnete smektische Phasen weitgehend unterdrückt. Die Verbindungen der Formel I mit längeren Seitenketten R¹ und R² besitzen daher im allgemeinen vergleichsweise breite chirale smektisch C Phasen. Die Verbindungen mit kürzeren Seitenketten R¹ und R² besitzen zum Teil nur monotrope oder virtuelle Phasen, fördern aber bei Verwendung in Gemischen ebenfalls die Ausbildung von chiralen smektisch C Phasen.

Dieser Befund steht im Widerspruch zur bisherigen Verwendung von Alkenylsubstituenten in achiralen Verbindungen, welche je nach Stellung und Konfiguration der Doppelbindung im allgemeinen zu einer Verschlechterung der flüssigkristallinen Eigenschaften oder zu einer Verstärkung der nematischen Tendenzen führt. Solche Verbindungen sind beispielsweise in EP 168 683, EP 167 912 und EP 122 389 beschrieben.

Die Verbindungen der Formel I besitzen eine gute chemische und thermische Stabilität und eine niedere Viskosität. Sie sind untereinander und mit bekannten Flüssigkristallen, insbesondere mit bekannten ferroelektrischen Flüssigkristallen gut mischbar.

Der Ausdruck "Halogen" bedeutet im Rahmen der vorliegenden Erfindung Fluor, Chlor, Brom oder Jod. Der Ausdruck Niederalkyl bedeutet Alkylgruppen mit 1-5 Kohlenstoffatomen, wie Methyl, Aethyl, Propyl, Isopropyl und dergleichen. Der Ausdruck "aromatischer Ring" umfasst substituiertes oder unsubstituiertes 1,4-Phenylen, Pyrimidin-2,5-diyl und Pyrazin-2,5-diyl.

Der Ausdruck "Kettenatome" bezeichnet im Rahmen der vorliegenden Erfindung die in R¹ bzw. R² in unverzweigter Kette vorhandenen Kohlenstoff- und Sauerstoffatome, d.h. im Falle von verzweigten Ketten werden Substituenten nicht mitgezählt. Angaben zur Stellung der Doppelbindung beziehen sich dabei auf die die Doppelbindung enthaltende Kette. Angaben zur Kettenlänge von R¹ bzw. R² beziehen sich auf die längste unverzweigte Kette. Eine in der Kette vorhandene Gruppe -O- zählt somit als 1 Kettenatom. Beispielsweise enthält 5-Octenyloxy 9 Kettenatome und die Doppelbindung ist durch 5 Kettenatome vom Ring getrennt. 5-Methylheptyl, 4-Methylhexyloxy und 5-Methoxyhexyl weisen beispielsweise je 7 Kettenatome in der längsten unverzweigten Kette auf.

Die in Formel I vorhandenen 1,4-Phenylen-Gruppen sind vorzugsweise unsubstituiert. Gewünschtenfalls können jedoch durch Verwendung substituierter 1,4-Phenylengruppen, wie 2-Methyl-1,4-phenylen, 2-Fluor-1,4-phenylen, 2-Cyano-1,4-phenylen und 2,3-Dicyano-1,4-phenylen, die Umwandlungstemperaturen, die Löslichkeit, die dielektrische Anisotropie und dergleichen modifiziert werden.

In obiger Formel I steht X² vorzugsweise für eine einfache Kovalenzbindung, -COO- oder -OOC-. Besonders bevorzugte Verbindungen der Formel I sind diejenigen, worin eine der Gruppen X¹ und X² eine einfache Kovalenzbindung und die andere eine einfache Kovalenzbindung, -COO- oder -OOC- bedeutet.

Eine in Formel I gegebenenfalls vorhandene trans-1,4-Cyclohexylengruppe ist vorzugsweise nicht an das Sauerstoffatom einer Estergruppe -COO- oder -OOC- gebunden. Bevorzugte Cyclohexanderivate sind im allgemeinen die Cyclohexancarbonsäureester, d.h. diejenigen Verbindungen der Formel I, worin eine gegebenenfalls vorhandene trans-1,4-Cyclohexylgruppe mit dem Kohlenstoffatom einer Estergruppe -COO- oder -OOC- verknüpft ist.

Beispiele besonders bevorzugter Gruppen von Verbindungen der Formel I sind die Verbindungen der allgemeinen Formeln 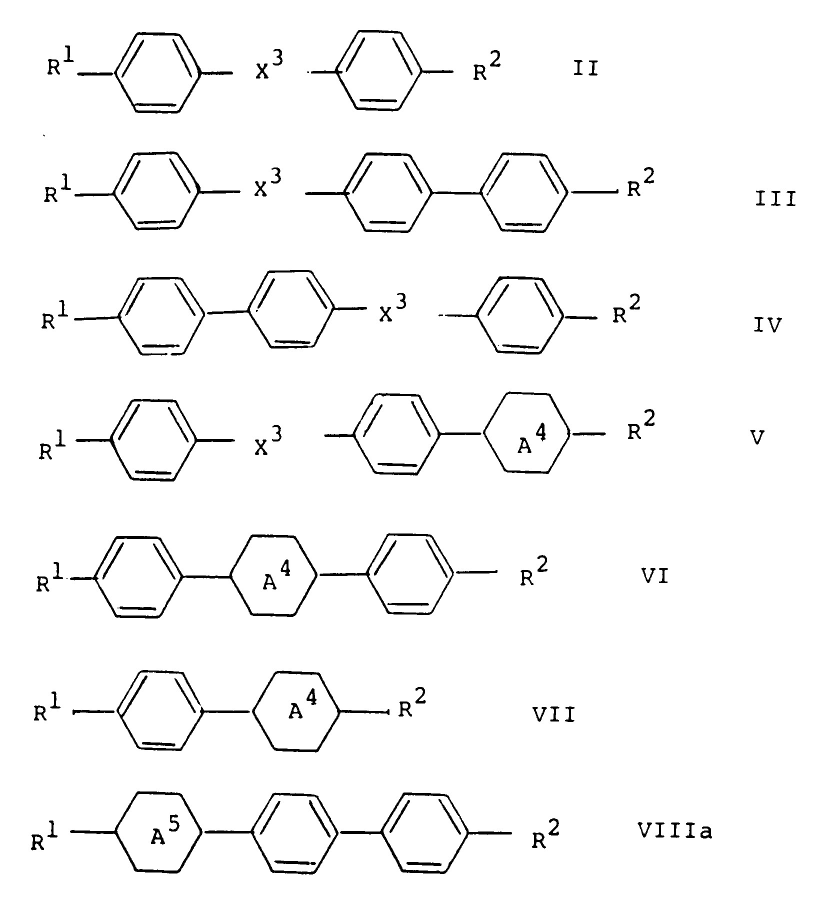 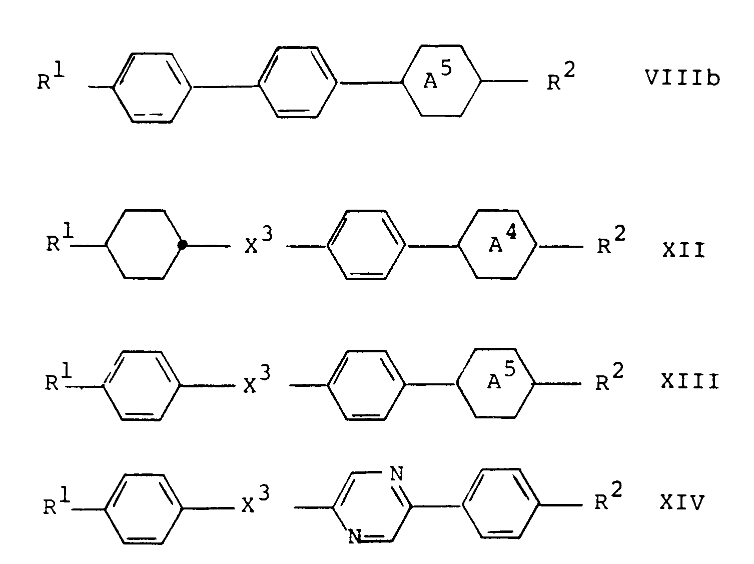
worin X³ -COO- oder -OOC- bezeichnet, Ring A⁴ Pyrimidin-2,5-diyl und Ring A⁵ trans-m-Dioxan-2,5-diyl darstellen, und R¹ und R² die obigen Bedeutungen haben.

Vorzugsweise sind der Pyrimidinring in den Formeln V, VII und XII und der m-Dioxanring in den Formeln VIII und XIII in Stellung 2 mit dem Benzolring verknüpft.

Als besonders geeignete Reste R¹ haben sich die geradkettigen und verzweigten Alkenyl- und Alkenyloxygruppen erwiesen, insbesondere diejenigen, welche zwischen der Doppelbindung und Ring A¹ mindestens 2, vorzugsweise mindestens 4 Kettenatome aufweisen. Die nicht chiralen, vorzugsweise geradkettigen Reste sind im allgemeinen bevorzugt. Beispiele besonders bevorzugter Reste R¹ sind die folgenden Gruppen, welche ausser bei endständiger Doppelbindung jeweils in der E- oder Z-Form vorliegen können: 4-Alkenyloxy, wie 4-Pentenyloxy, 4-Hexenyloxy, 4-Heptenyloxy, 4-Octenyloxy, 4-Nonenyloxy, 4-Decenyloxy, 4-Undecenyloxy und 4-Dodecenyloxy; 5-Alkenyl, wie 5-Hexenyl, 5-Heptenyl, 5-Octenyl, 5-Nonenyl, 5-Decenyl, 5-Undecenyl und 5-Dodedenyl; 5-Alkenyloxy, wie 5-Hexenyloxy, 5-Heptenyloxy, 5-Octenyloxy, 5-Nonenyloxy, 5-Decenyloxy, 5-Undecenyloxy und 5-Dodecenyloxy; 6-Alkenyl, wie 6-Heptenyl, 6-Octenyl, 6-Nonenyl, 6-Decenyl, 6-Undecenyl und 6-Dodecenyl; 6-Alkenyloxy, wie 6-Heptenyloxy, 6-Octenyloxy, 6-Nonenyloxy, 6-Decenyloxy, 6-Undecenyloxy und 6-Dodecenyloxy; 7-Alkenyl, wie 7-Octenyl, 7-Nonenyl, 7-Decenyl, 7-Undecenyl und 7-Dodecenyl; 7-Alkenyloxy, wie 7-Octenyloxy, 7-Nonenyloxy, 7-Decenyloxy, 7-Undecenyloxy und 7-Dodecenyloxy; 8-Alkenyl, wie 8-Nonenyl, 8-Decenyl, 8-Undecenyl und 8-Dodecenyl; 8-Alkenyloxy, wie 8-Nonenyloxy, 8-Decenyloxy, 8-Undecenyloxy und 8-Dodecenyloxy; 9-Alkenyl, wie 9-Decenyl, 9-Undecenyl und 9-Dodecenyl; 9-Alkenyloxy, wie 9-Decenyloxy, 9-Undecenyloxy und 9-Dodecenyloxy; 10-Alkenyl, wie 10-Undecenyl und 10-Dodecenyl; 10-Alkenyloxy, wie 10-Undecenyloxy und 10-Dodecenyloxy; und dergleichen. Besonders bevorzugte Gruppen R¹ sind diejenigen mit 5 oder mehr Kettenatomen zwischen der Doppelbindung und Ring A¹ sowie diejenigen mit endständiger Doppelbindung.

Die ferroelektrischen Eigenschaften werden jedoch nicht nur durch die genannten Reste R¹ gefördert, sondern generell auch durch von Alkenyl abgeleitete Gruppen, worin ein oder mehrere Wasserstoffatome durch Halogen ersetzt sind und/oder eine oder zwei nicht benachbarte CH₂-Gruppen durch -O- ersetzt sind. Gewünschtenfalls kann R¹ auch eine weitere C-C-Doppelbindung und/oder ein chirales Kohlenstoffatom aufweisen. Wesentlich für den gefundenen Effekt ist jedoch, dass R¹ mindestens eine C-C-Doppelbindung aufweist.

R¹ besitzt zweckmässigerweise höchstens 18 Kohlenstoffatome, vorzugsweise etwa 4-15 und besonders bevorzugt etwa 6-12 Kohlenstoffatome. Die Doppelbindung ist im allgemeinen durch mindestens 2, vorzugsweise durch mindestens 4 und besonders bevorzugt durch mindestens 5 Kettenatome vom Ring A¹ getrennt.

R² kann geradkettig oder verzweigt, chiral oder achiral sein. R² umfasst übliche unpolare oder schwach polare Gruppen, nämlich Alkyl oder Alkenyl sowie davon abgeleitete Gruppen, worin ein oder mehrere Wasserstoffatome durch Halogen ersetzt sind und/oder ein oder zwei nicht benachbarte CH₂-Gruppen durch -O- ersetzt sind.

Besonders bevorzugte Reste R² sind im Falle geradkettiger achiraler Gruppen die Alkyl- und Alkoxygruppen, wie Pentyl, Hexyl, Heptyl, Octyl, Nonyl, Decyl, Undecyl, Butyloxy, Pentyloxy, Hexyloxy, Heptyloxy, Octyloxy, Nonyloxy, Decyloxy, Undecyloxy und dergleichen, und im Falle verzweigtkettiger, chiraler Gruppen die leicht zugänglichen Methylalkyl- und Methylalkoxygruppen, wie 2-Methylbutyl, 3-Methylpentyl, 4-Methylhexyl, 5-Methylheptyl, 6-Methyloctyl, 7-Methylnonyl, 2-Methylbutyloxy, 3-Methylpentyloxy, 4-Methylhexyloxy, 5-Methylheptyloxy, 6-Methyloctyloxy, 1-Methylheptyloxy und dergleichen.

R² besitzt zweckmässigerweise höchstens 18 Kohlenstoffatome, vorzugsweise etwa 4-15 und besonders bevorzugt etwa 5-12 Kohlenstoffatome. Eine in R² gegebenenfalls vorhandene C-C-Doppelbindung ist vorzugsweise durch mindestens 2, besonders bevorzugt durch mindestens 4 Kettenatome vom Ring (A² im Fall von n=0 bzw. A³ im Falle von n=1) getrennt.

Gemäss einem bevorzugten Aspekt besitzt mindestens einer der Reste R¹ und R² besitzt ein chirales Kohlenstoffatom. Bevorzugte Gruppen R¹ bwz. R² mit chiralen Kohlenstoffatomen sind die Gruppen der allgemeinen Formeln 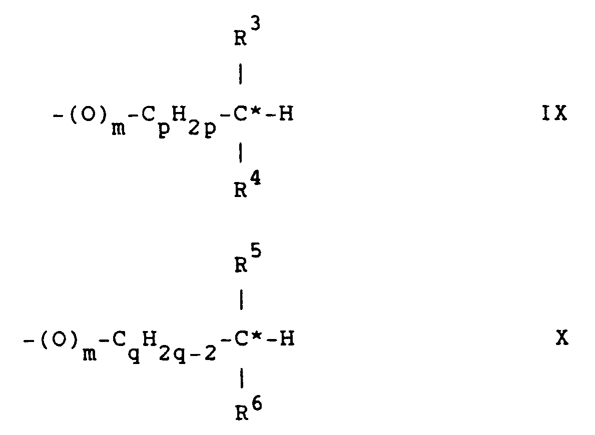
worin m, p und q ganze Zahlen bedeuten und m für 0 oder 1, p für 0-6 und q für 2-6 stehen; R³ Alkyl und R⁴ Halogen, Alkoxy, Alkenyl, Alkenyloxy oder von R³ verschiedenes Alkyl bedeuten; oder R³ Alkenyl und R⁴ Alkoxy bedeuten; R⁵ Alkyl und R⁶ Halogen, Alkoxy oder von R⁵ verschiedenes Alkyl bezeichnen; und C* das chirale Kohlenstoffatom bedeutet;
wobei als chirale Reste R¹ nur jene Gruppen in Betracht kommen, welche eine C-C-Doppelbindung aufweisen.

Besonders bevorzugte chirale Reste R² sind die Gruppen der Formel IX, worin R³ Methyl und R⁴ von Methyl verschiedenes Alkyl, vorzugsweise Aethyl bedeutet.

Von den optisch aktiven Verbindungen der Formeln I-VIII und XII-XIV sind im allgemeinen diejenigen bevorzugt, worin R² ein chirales Kohlenstoffatom aufweist und vorzugsweise eine Gruppe der Formel IX oder X bedeutet.

Besonders bevorzugt sind diejenigen Verbindungen der Formeln I-VIII und XII-XIV, worin jeweils R¹ eine nicht chirale, vorzugsweise geradkettige Gruppe bedeutet und R² gegebenenfalls ein chirales Kohlenstoffatom aufweist. Ganz besonders bevorzugt sind somit jene Verbindungen der Formeln I-VIII und XII-XIV, worin jeweils R¹ eine nicht chirale, vorzugsweise geradkettige Alkenyl- oder Alkenyloxygruppe (insbesondere eine der oben genannten bevorzugten Alkenyl-oder Alkenyloxygruppen) bezeichnet und R² eine geradkettige oder verzweigte Alkyl- oder Alkoxygruppe (wie n-Alkyl, n-Alkoxy, Methylalkyl oder Methylalkoxy) bedeutet.

Bevorzugte Verbindungen der Formel II sind diejenigen, worin R¹ Alkenyloxy und R² Alkoxy bedeuten, insbesondere diejenigen, worin R¹ geradkettiges Alkenyloxy und R² geradkettiges oder verzweigtes Alkoxy bedeutet.

Bevorzugte Verbindungen der Formel III sind diejenigen, worin R¹ Alkenyloxy (vorzugsweise geradkettiges Alkenyloxy) und R² geradkettiges oder verzweigtes Alkyl oder Alkoxy bedeuten, insbesondere diejenigen, worin R² geradkettiges oder verzweigtes Alkyl und X³ -OOC- bedeuten.

Bevorzugte Verbindungen der Formel IV sind diejenigen, worin R¹ Alkenyloxy (vorzugsweise geradkettiges Alkenyloxy) und R² geradkettiges oder verzweigtes Alkoxy bedeuten. X³ steht vorzugsweise für -COO-.

Bevorzugte Verbindungen der Formel V sind diejenigen, worin R¹ Alkenyloxy (vorzugsweise geradkettiges Alkenyloxy) und R² geradkettiges oder verzweigtes Alkyl bedeuten. X³ steht vorzugsweise für -COO-. Der Pyrimidinring A⁴ ist vorzugsweise in Stellung 2 mit dem Benzolring verknüpft.

Bevorzugte Verbindungen der Formel VI sind diejenigen, worin R¹ Alkenyloxy (vorzugsweise geradkettiges Alkenyloxy) und R² geradkettiges oder verzweigtes Alkyl bedeuten. Der Pyrimidinring ist vorzugsweise in Stellung 2 mit der Gruppe p-R¹-Phenyl verknüpft.

Bevorzugte Verbindungen der Formel VII sind diejenigen, worin R¹ Alkenyloxy (vorzugsweise geradkettiges Alkenyloxy) und R² geradkettiges oder verzweigtes Alkyl bedeuten. Der Pyrimidinring A⁴ ist vorzugsweise in Stellung 2 mit dem Benzolring verknüpft.

Bevorzugte Verbindungen der Formel VIIIa sind diejenigen, worin R¹ Alkenyl (vorzugsweise geradkettiges Alkenyl) und R² geradkettiges oder verzweigtes Alkoxy bedeuten. Bevorzugte Verbindungen der Formel VIIIb sind diejenigen, worin R¹ Alkenyloxy (vorzugsweise geradkettiges Alkenyloxy) und R² geradkettiges oder verzweigtes Alkyl bedeuten. Der Dioxanring A⁵ ist in den Formeln VIIIa und VIIIb vorzugsweise in Stellung 2 mit der Biphenylgruppe verknüpft.

Bevorzugte Verbindungen der Formel XII sind diejenigen, worin R¹ Alkenyl (vorzugsweise geradkettiges Alkenyl) und R² geradkettiges oder verzweigtes Alkyl bedeuten. Der Pyrimidinring A⁴ ist vorzugsweise in Stellung 2 mit dem Benzolring verknüpft. In Formel XII steht vorzugsweise X³ für -COO-.

Bevorzugte Verbindungen der Formel XIII sind diejenigen, worin R¹ Alkenyloxy (vorzugsweise geradkettiges Alkenyloxy) und R² geradkettiges oder verzweigtes Alkyl bedeuten. Der Dioxanring A⁵ ist vorzugsweise in Stellung 2 mit dem Benzolring verknüpft. In Formel XIII steht vorzugsweise X³ für -COO-.

Bevorzugte Verbindungen der Formel XIV sind diejenigen, worin R¹ Alkenyl oder Alkenyloxy (vorzugsweise geradkettiges Alkenyl oder Alkenyloxy) und R² geradkettiges oder verzweigtes Alkyl oder Alkoxy bedeuten. Vorzugsweise steht X³ in Formel XIV für -COO-.

Ferner weist die Gruppe R¹ in den Formeln II-VIII und XII-XIV zwischen der Doppelbindung und dem Ring an den sie gebunden ist vorzugsweise mindestens 2 Kettenatome, besonders bevorzugt mindestens 4 Kettenatome auf.

Die Verbindungen der Formel I mit kurzen Resten R¹ und R² besitzen oft nur monotrope oder virtuelle Flüssigkristall-Eigenschaften, sind aber ebenfalls zur Verbesserung der Eigenschaften von ferroelektrischen Gemischen geeignet. Die Verbindungen der Formel I mit längeren Resten R¹ und R² besitzen grösstenteils relativ breite chirale smektisch C Phasen.

Die Erfindung betrifft ebenfalls die neuen Verbindungen der Formel 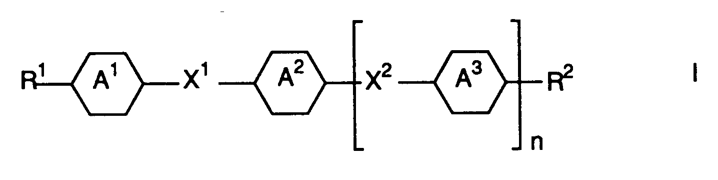
worin n für die Zahl 0 oder 1 steht; X¹ eine einfache Kovalenzbindung, -COO- oder -OOC- und X² eine einfache Kovalenzbindung, -COO-, -OOC-, -CH₂CH₂-, -OCH₂- oder -CH₂O- darstellen; die Ringe A¹,A², und A³ unabhängig voneinander unsubstituiertes oder mit Cyano, Halogen oder Niederalkyl substituiertes 1,4-Phenylen oder einer der Ringe auch Pyrimidin-2,5-diyl oder Pyrazin-2,5-diyl bedeutet und/oder, wenn n für die Zahl 1 steht, einer der Ringe auch trans-1,4-Cyclohexylen oder trans-m-Dioxan-3,5-diyl bedeutet; mit der Massgabe, dass einer der vorhandenen Ringe für Pyrimidin-2,5-diyl oder Pyrazin-2,5-diyl steht, wenn ein weiterer Ring trans-1,4-Cyclohexylen bedeutet oder, wenn n für die Zahl 0 und X¹ für eine einfache Kovalenzbindung stehen; R¹ eine Alkenylgruppe mit endständiger Doppelbindung mit bis zu 18 Kohlenstoffatomen bedeutet, worin gegebenenfalls 1 CH₂-Gruppe durch -O- ersetzt ist; R² eine Alkylgruppe mit bis zu 18 Kohlenstoffatomen bedeutet, worin gegebenenfalls 1 CH₂-Gruppe durch -O- ersetzt ist, mit der Massgabe, dass der Rest R¹ mindestens 4 Kettenatome (d.h. gesättigte Kohlenstoffatome oder Sauerstoffatome) zwischen der Doppelbindung und Ring A¹ aufweist.

Vorzugsweise beträgt die Anzahl der Kettenatome in den längsten unverzweigten Ketten in R¹ und R² zusammen mindestens 8, wenn n für die Zahl 1 steht, und mindestens 10, wenn n für die Zahl 0 steht. Besonders bevorzugt beträgt die Anzahl der Kettenatome in unverzweigter Kette in R¹ und R² zusammen mindestens 10, insbesondere mindestens 12, wenn n für die Zahl 1 steht, und mindestens 12, insbesondere mindestens 14, wenn n für die Zahl 0 steht. Vorzugsweise steht Ring A² für Pyrazin-2,5-diyl, wenn n die Zahl 1, Ring A¹ gegebenenfalls substituiertes 1,4-Phenylen und Ring A³ trans-1,4-Cyclohexylen bedeuten.

Bevorzugte erfindungsgemässe Verbindungen sind ferner die Verbindungen gemäss den oben aufgeführten bevorzugten Aspekten, welche die angegebene Anzahl Kettenatome in R¹ und R² aufweisen. Beispiele besonders bevorzugter Verbindungen der Formel I sind die entsprechenden Verbindungen der Formeln II-VIII und XII-XIV sowie die in den Synthesebeispielen genannten Verbindungen.

Die Verbindungen der Formel I können in an sich bekannter Weise hergestellt werden, beispielsweise nach den in den Synthesebeispielen illustrierten Methoden. Die Einführung von chiralen Resten und Alkenylsubstituenten kann beispielsweise nach den üblichen für cholesterische bzw. nematische Substanzen beschriebenen Methoden erfolgen.

Die Herstellung der erfindungsgemässen flüssigkristallinen Gemische und die Verwendung in elektro-optischen Vorrichtungen kann ebenfalls in an sich bekannter Weise erfolgen.

Die Verbindungen der Formel I können untereinander und/oder mit üblichen Flüssigkristallmaterialien gemischt werden. Sie eignen sich vor allem zur Herstellung von ferroelektrischen Gemischen, d.h. von Gemischen mit einer chiral smektischen Phase, insbesondere von Gemischen mit einer smektisch C Phase.

Die verwendeten flüssigkristallinen Gemische für ferroelektrische elektro-optische Anzeigen enthalten mindestens 2 Komponenten, wovon mindestens eine Komponente eine Verbindung der Formel I ist. Der Anteil der Verbindungen der Formel I in den Gemischen kann in breiten Grenzen variieren und beispielsweise etwa 1-100 Gew.-% betragen. Im allgemeinen beträgt der Anteil an Verbindungen der Formel I vorzugsweise etwa 10-70 Gew.-% und besonders bevorzugt etwa 20-50 Gew.-%.

Diese Gemische können neben einer oder mehreren Verbindungen der Formel I übliche Komponenten für chiral smektische Gemische enthalten. Vorzugsweise enthalten sie neben einer oder mehreren Verbindungen der Formel I eine oder mehrere Verbindungen der allgemeinen Formel 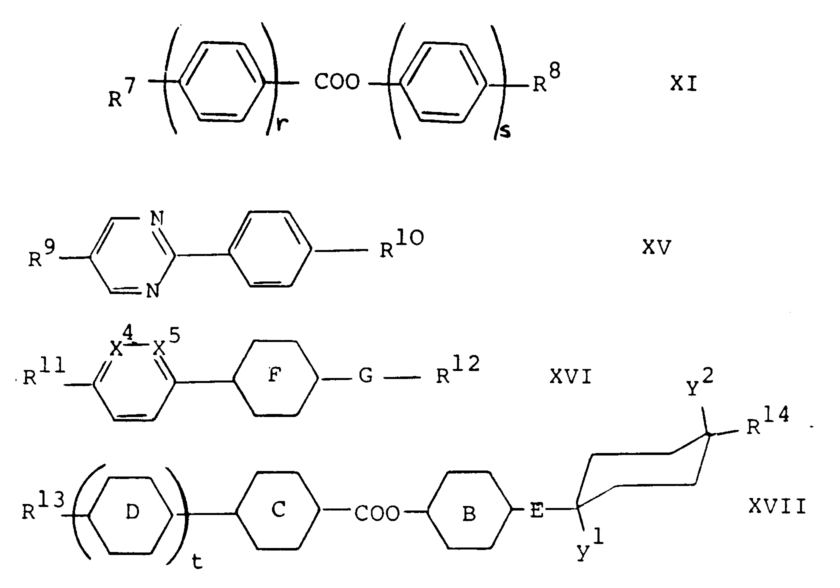
worin R⁷ und R⁸ Alkyl, Alkoxy, Alkanoyl, Alkanoyloxy, Alkoxycarbonyl oder Alkoxycarbonyloxy mit bis zu 18 Kohlenstoffatomen bedeuten; r und s die Zahlen 1 oder 2 bezeichnen; R⁹ und R¹⁰ Alkyl oder Alkoxy mt 1-18 Kohlenstoffatomen darstellen; X⁴ für CH und X⁵ für N steht oder X⁴ für N und X⁵ für CH steht; G eine einfache Kovalenzbindung, trans-1,4-Cyclohexylen, cis-4-Cyano-trans-1,4-cyclohexylen oder gegebenenfalls mit Halogen oder Methyl substituiertes 1,4-Phenylen bedeutet; Ring F trans-1,4-Cyclohexylen, gegebenenfalls mit Halogen oder Methyl substituiertes 1,4-Phenylen oder, wenn G eine einfache Kovalenzbindung bedeutet, auch cis-4-Cyano-trans-1,4-cyclohexylen darstellt; R¹¹ und R¹² je eine gegebenenfalls halogensubstituierte Alkyl- oder Alkenylgruppe bezeichnen, in welcher gegebenenfalls eine oder zwei nicht benachbarte CH₂-Gruppen durch -O-, -COO- und/oder -OOC- ersetzt sind; t für die Zahl 0 oder 1 steht; E eine einfache Kovalenzbindung, -CH₂CH₂-, -OCH₂-, -COO- oder -OOC- bedeutet; die Ringe B, C und D gegebenenfalls mit Cyano, Halogen oder Niederalkyl substituiertes 1,4-Phenylen bezeichnen; Y¹ und Y² Wasserstoff bedeuten oder einer der Substituenten Y¹ und Y² auch Cyano bedeuet; und R¹³ und R¹⁴ gegebenenfalls halogensubstituiertes C₁-C₁₈-Alkyl oder gegebenenfalls halogensubstituiertes C₂-C₁₈-Alkenyl darstellen, in welchen gegebenenfalls eine oder zwei nicht benachbarte CH₂-Gruppen durch Sauerstoff ersetzt sind.

Die smektischen Gemische können grundsätzlich aus optisch inaktiven Verbindungen bestehen. Vorzugsweise enthalten sie jedoch eine oder mehrere optisch aktive Verbindungen zwecks Erzielung einer spontanen Polarisation, d.h. sie enthalten vorzugsweise mindestens eine optisch aktive Verbindung der Formel I mit chiralem Kohlenstoffatom in R¹ und/oder R² und/oder mindestens einen optisch aktiven Zusatz. Bevorzugte, chiral smektische Gemische mit mindestens 2 Komponenten sind somit diejenigen, worin mindestens eine Komponente eine optisch aktive Verbindung der Formel I ist, und eine zweite Komponente optisch aktiv oder optisch inaktiv sein kann, sowie diejenigen, worin mindestens eine Komponente eine optisch inaktive, vorzugsweise achirale Verbindung der Formel I ist und eine zweite Komponente optisch aktiv ist. Die zweite Komponente ist vorzugsweise eine weitere Verbindung der Formel I oder eine Verbindung der Formeln XI, XV, XVI oder XVII.

Die Erfindung wird durch die folgenden Beispiele weiter veranschaulicht. Die Enantiomere der genannten Verbindungen besitzen jeweils die gleichen Phasenumwandlungstemperaturen und eine gleich grosse Verdrillung aber von entgegengesetzten Vorzeichen. Die zur Charakterisierung der Phasenumwandlungen verwendeten Abkürzungen besitzen folgende Bedeutungen:
- C: für kristallin
- S: für smektisch
- S_{A}: für smektisch A
- S_{B}: für smektisch B
- S_{C}: für smektisch C (achirale Verbindung oder Racemat)
- S_{C}*: für chiral smektisch C
- N: für nematisch
- Ch: für cholesterisch
- I: für isotrop.

### Beispiel 1

Ein Gemisch von 0,3 g 4-(9-Decenyloxy)benzoesäure, 0,23 g (S)-4-(4-Methylhexyloxy)phenol, 0,27 g N,Nʹ-Dicydohexylcarbodiimid, 0,04 g 4-(Dimethylamino)pyridin und 50 ml absolutem Dichlormethan wurde über Nacht bei Raumtemperatur gerührt. Das Gemisch wurde anschliessend filtriert und eingeengt. Das erhaltene Rohprodukt wurde an Kieselgel mit Toluol chromatographisch gereinigt. Der erhaltene (S)-4-(9-Decenyloxy)benzoesäure -4-(4-methylhexyloxy)phenylester wurde aus Methanol umkristallisiert; Smp. (C-S_{C}*) 28,5°C, Phasenübergang (S_{C}*-S_{A}) 54°C, Klp. (S_{A}-I) 65°C.

Die als Ausgangsmaterial verwendete 4-(9-Decenyloxy)benzoesäure wurde wie folgt hergestellt:
a) Eine Lösung von 20 g 9-Decen-1-ol in 50 ml absolutem Pyridin wurde bei 0°C und unter Argonbegasung portionenweise mit 25,6 g p-Tosylchlorid versetzt. Nach 8 Stunden Rühren bei 0°C (Bildung eines weissen Niederschlages) wurde das Reaktionsgemisch mit 50 ml Wasser versetzt, mit 100 ml 2N Salzsäure vorsichtig sauer gestellt und dreimal mit je 30 ml Diäthyläther extrahiert. Die vereinigten organischen Phasen wurden mit 500 ml Wasser, 100 ml konzentrierter Kaliumcarbonat-Lösung und mit 500 ml Wasser gewaschen, über Magnesiumsulfat getrocknet und eingeengt. Das rohe 9-Decen-1-yl-p-tosylat (36 g) wurde weiter verwendet ohne zusätzliche Reinigung.
b) Ein Gemisch von 18 g 9-Decen-1-yl-p-tosylat, 17,7 g 4-Hydroxybenzoesäure-methylester, 3,6 g Kaliumhydroxid, 75 ml Aethanol und 1 ml Wasser wurde über Nacht unter Rückfluss erhitzt. Anschliessend wurde das abgekühlte Reaktionsgemisch auf Eiswasser gegossen und dreimal mit je 50 ml Diäthyläther extrahiert. Die organischen Phasen wurden mit 500 ml Wasser gewaschen, über Magnesiumsulfat getrocknet und eingeengt. Chromatographie des Rückstandes an Kieselgel mit Toluol ergab 17 g 4-(9-Decenyloxy)benzoesäure-methylester, welcher ohne zusätzliche Reinigung weiterverwendet wurde.
c) Ein Gemisch von 17 g 4-(9-Decenyloxy)benzoesäure-methylester, 17 g Kaliumhydroxid, 20 ml Wasser und 200 ml Methanol wurde 4 Stunden auf dem Oelbad auf 75°C erhitzt. Die abgekühlte Mischung wurde mit 100 ml eisgekühlter 3N Salzsäure versetzt und die freigesetzte Säure in 150 ml Diäthyläther aufgenommen. Die abgetrennte wässrige Phase wurde zweimal mit je 100 ml Diäthyläther nachextrahiert. Die vereinigten organischen Phasen wurden mit 50 ml 2N Natriumcarbonat-Lösung und mehrmals mit Wasser gewaschen, über Magnesiumsulfat getrocknet und eingeengt. Umkristallisation des erhaltenen Rohproduktes aus Aethanol ergab 7 g 4-(9-Decenyloxy)benzoesäure, Smp. (C-S_{C}) 77°C, Phasenübergang (S_{C}-N) 116°C, Klp. (N-I) 137°C.

In analoger Weise können folgende Verbindungen hergestellt werden:
(S)-4-(5-Hexenyloxy)benzoesäure-4-(2-methylbutyloxy) phenylester, Smp. (C-Ch) 61,5°C, Klp. (Ch-I) 40°C;
(S)-4-(6-Heptenyloxy)benzoesäure-4-(2-methylbutyloxy) phenylester, Smp. (C-I) 56°C, Klp. (S_{A}-I) 54,5°;
(S)-4-(7-Octenyloxy)benzoesäure-4-(2-methylbutyloxy) phenylester, Smp. (C-I) 43,5°C, Phasenübergang (S_{C}*-S_{A}) 26°C, Klp. (S_{A}-I) 49°C;
(S)-4-(8-Nonenyloxy)benzoesäure-4-(2-methylbutyloxy) phenylester;
(S)-4-(9-Decenyloxy)benzoesäure-4-(2-methylbutyloxy) phenylester, Klp. (C-S_{A}) 39°C, Phasenübergang (S_{C}*-S_{A}) 36°C, Klp. (S_{A}-I) 55°C;
(S)-4-(10-Undecenyloxy)benzoesäure-4-(2-methylbutyloxy) phenylester, Smp. (C-S_{A}) 48°C, Phasenübergang (S_{C}*-S_{A}) 33°C, Klp. (S_{A}-I) 59,5°C;
(S)-4-(5Z-Heptenyloxy)benzoesäure-4-(2-methylbutyloxy) phenylester;
(S)-4-(5Z-Octenyloxy)benzoesäure-4-(2-methylbutyloxy) phenylester;
(S)-4-(5Z-Nonenyloxy)benzoesäure-4-(2-methylbutyloxy) phenylester;
(S)-4-(5Z-Decenyloxy)benzoesäure-4-(2-methylbutyloxy) phenylester;
(S)-4-(5Z-Undecenyloxy)benzoesäure-4-(2-methylbutyloxy) phenylester;
(S)-4-(5-Hexenyloxy)benzoesäure-4-(4-methylhexyloxy) phenylester, Smp. (C-I) 62,5°C, Klp. (Ch-I) 58°C;
(S)-4-(6-Heptenyloxy)benzoesäure-4-(4-methylhexyloxy) phenylester;
(S)-4-(7-Octenyloxy)benzoesäure-4-(4-methylhexyloxy) phenylester; Smp. (C-Ch) 47,5°C, Phasenübergang (S_{C}*-S_{A}) 44°C, Phasenübergang (S_{A}-Ch) 60,5°C, Klp. (Ch-I) 63°C;
(S)-4-(8-Nonenyloxy)benzoesäure-4-(4-methylhexyloxy) phenylester;
(S)-4-(10-Undecenyloxy)benzoesäure-4-(4-methylhexyloxy) phenylester, Smp. (C-S_{C}*) 39,5°C, Phasenübergang (S_{B}-S_{C}*) 31°C, Phasenübergang (S_{C}*-S_{A}) 55,5°C, Klp. (S_{A}-I) 70°C;
(S)-4-(5Z-Heptenyloxy)benzoesäure-4-(4-methylhexyloxy) phenylester;
(S)-4-(5Z-Octenyloxy)benzoesäure-4-(4-methylhexyloxy) phenylester; Smp. (C-I) 61°C, Phasenübergang (S_{C}*-Ch) 47°, Klp. (Ch-I) 50,5°C;
(S)-4-(5Z-Nonenyloxy)benzoesäure-4-(4-methylhexyloxy) phenylester;
(S)-4-(5Z-Decenyloxy)benzoesäure-4-(4-methylhexyloxy) phenylester;
(S)-4-(5Z-Undecenyloxy)benzoesäure-4-(4-methylhexyloxy) phenylester;
(S)-4-(7-Octenyloxy)benzoesäure-4-(1-methylheptyloxy) phenylester;
(S)-4-(8-Nonenyloxy)benzoesäure-4-(1-methylheptyloxy) phenylester;
(S)-4-(9-Decenyloxy)benzoesäure-4-(1-methylheptyloxy) phenylester;
(S)-4-(10-Undecenyloxy)benzoesäure-4-(1-methylheptyloxy) phenylester;
(S)-4-(5Z-Octenyloxy)benzoesäure-4-(1-methylheptyloxy) phenylester;
(S)-4-(5-Hexenyloxy)benzoesäure-4-(6-methyloctyloxy) phenylester, Smp. (C-S_{C}*) 44,5°C, Phasenübergang (S_{C}*-Ch) 51°C, Klp. (Ch-I) 64,5°C;
(S)-4-(6-Heptenyloxy)benzoesäure-4-(6-methyloctyloxy) phenylester, Smp. (C-S_{A}) 41,5°C, Phasenübergang (S_{C}*-S_{A}) 40°C, Phasenübergang (S_{A}-Ch) 73,5°C, Klp. (Ch-I) 75°C;
(S)-4-(7-Octenyloxy)benzoesäure-4-(6-methyloctyloxy) phenylester, Smp. (C-S_{C}*) 54°C, Phasenübergang (S_{C}*-S_{A}) 55,5°C, Phasenübergang (S_{A}-Ch) 70,5°C, Klp. (Ch-I) 71°C;
(S)-4-(8-Nonenyloxy)benzoesäure-4-(6-methyloctyloxy) phenylester;
(S)-4-(9-Decenyloxy)benzoesäure-4-(6-methyloctyloxy) phenylester; Smp. (C-S_{C}*) 63°C, Phasenübergang (S_{B}-S_{C}*) 37°C, Phasenübergang (S_{C}*-S_{A}*) 67°C, Klp. (S_{A}-I) 74,5°C;
(S)-4-(10-Undecenyloxy)benzoesäure-4-(6-methyloctyloxy) phenylester, Smp. (C-S_{C}*) 53°C, Phasenübergang (S_{B}-S_{C}*) 46°C, Phasenübergang (S_{C}*-S_{A}) 68,5°C, Klp. (S_{A}-I) 78°C;
(S)-4-(5Z-Heptenyloxy)benzoesäure-4-(6-methyloctyloxy) phenylester;
(S)-4-(5Z-Octenyloxy)benzoesäure-4-(6-methyloctyloxy) phenylester; Smp. (C-S_{C}*) 48,5°C, Phasenübergang (S_{C}*-Ch) 55°C, Klp. (Ch-I) 58°C;
(S)-4-(5Z-Nonenyloxy)benzoesäure-4-(6-methyloctyloxy) phenylester;
(S)-4-(5Z-Decenyloxy)benzoesäure-4-(6-methyloctyloxy) phenylester;
(S)-4-(5Z-Undecenyloxy)benzoesäure-4-(6-methyloctyloxy) phenylester;
(S)-4ʹ-(5-Hexenyloxy)-4-biphenylcarbonsäure -4-(4-methylhexyloxy)phenylester;
(S)-4ʹ-(7-Octenyloxy)-4-biphenylcarbonsäure -4-(4-methylhexyloxy)phenylester;
(S)-4ʹ-(9-Decenyloxy)-4-biphenylcarbonsäure -4-(4-methylhexyloxy)phenylester;
(S)-4ʹ-(5Z-Octenyloxy)-4-biphenylcarbonsäure -4-(4-methylhexyloxy)phenylester;
(S)-4ʹ-(5-Hexenyloxy)-4-biphenylcarbonsäure -4-(6-methyloctyloxy)phenylester;
(S)-4ʹ-(7-Octenyloxy)-4-biphenylcarbonsäure -4-(6-methyloctyloxy)phenylester;
(S)-4ʹ-(9-Decenyloxy)-4-biphenylcarbonsäure -4-(6-methyloctyloxy)phenylester;
(S)-4ʹ-(5Z-Octenyloxy)-4-biphenylcarbonsäure -4-(6-methyloctyloxy)phenylester;
(S)-4ʹ-(7-Octenyloxy)-4-biphenylcarbonsäure -4-(1-methylheptyloxy)phenylester;
(S)-4ʹ-(8-Nonenyloxy)-4-biphenylcarbonsäure -4-(1-methylheptyloxy)phenylester;
(S)-4ʹ-(9-Decenyloxy)-4-biphenylcarbonsäure -4-(1-methylheptyloxy)phenylester;
(S)-4ʹ-(5Z-Octenyloxy)-4-biphenylcarbonsäure -4-(1-methylheptyloxy)phenylester;
(S)-4-(9-Decenyloxy)benzoesäure-4ʹ-(2-methylbutyloxy) -4-biphenylylester;
(S)-4-(7-Octenyloxy)benzoesäure-4ʹ-(4-methylhexyloxy) -4-biphenylylester;
(S)-4-(9-Decenyloxy)benzoesäure-4ʹ-(4-methylhexyloxy) -4-biphenylylester;
(S)-4-(5Z-Octenyloxy)benzoesäure-4ʹ-(4-methylhexyloxy) -4-biphenylylester;
(S)-4-(7-Octenyloxy)benzoesäure-4ʹ-(6-methyloctyloxy) -4-biphenylylester;
(S)-4-(9-Decenyloxy)benzoesäure-4ʹ-(6-methyloctyloxy) -4-biphenylylester;
(S)-4-(5Z-Decenyloxy)benzoesäure-4ʹ-(6-methyloctyloxy) -4-biphenylylester;
(S)-4-(7-Octenyloxy)benzoesäure-4ʹ-(1-methylheptyloxy) -4-biphenylylester;
(S)-4-(8-Nonenyloxy)benzoesäure-4ʹ-(1-methylheptyloxy) -4-biphenylylester;
(S)-4-(9-Decenyloxy)benzoesäure-4ʹ-(1-methylheptyloxy) -4-biphenylylester;
(S)-4-(5Z-Octenyloxy)benzoesäure-4ʹ-(1-methylheptyloxy) -4-biphenylylester;
(S)-4-(5-Hexenyloxy)benzoesäure-4-(5-[5-methylheptyl] -2-pyrimidinyl)phenylester, Smp. (C-Ch) 67,5°C, Phasenübergang (S_{C}*-Ch) 50,5°C, Klp. (Ch-I) 142,5°C;
(S)-4-(6-Heptenyloxy)benzoesäure-4-(5-[5-methylheptyl] -2-pyrimidinyl)phenylester, Smp. (C-S_{C}*) 43,5°C, Phasenübergang (S_{C}*-Ch) 47,5°C, Klp. (Ch-I) 148,5°C;
(S)-4-(7-Octenyloxy)benzoesäure-4-(5-[5-methylheptyl] -2-pyrimidinyl)phenylester, Smp. (C-S_{C}*) 55,5°C, Phasenübergang (S_{C}*-Ch) 58°C, Klp. (C-Ch) 140,5°C;
(S)-4-(8-Nonenyloxy)benzoesäure-4-(5-[5-methylheptyl] -2-pyrimidinyl)phenylester;
(S)-4-(9-Decenyloxy)benzoesäure-4-(5-[5-methylheptyl] -2-pyrimidinyl)phenylester, Smp. (C-S_{C}*) 68°C, Phasenübergang (S_{C}*-Ch) 70,5°C, Klp. (Ch-I) 135,5°C;
(S)-4-(10-Undecenyloxy)benzoesäure-4-(5-[5-methylheptyl] -2-pyrimidinyl)phenylester, Smp. (C-S_{C}*) 60,5°C, Phasenübergang (S_{C}*-Ch) 75°C, Klp. (Ch-I) 135,5°C;
(S)-4-(5Z-Heptenyloxy)benzoesäure-4-(5-[5-methylheptyl] -2-pyrimidinyl)phenylester;
(S)-4-(5Z-Octenyloxy)benzoesäure-4-(5-[5-methylheptyl] -2-pyrimidinyl)phenylester;
(S)-4-(5Z-Nonenyloxy)benzoesäure-4-(5-[5-methylheptyl] -2-pyrimidinyl)phenylester;
(S)-4-(5-Hexenyloxy)benzoesäure-4-(5-[6-methyloctyl] -2-pyrimidinyl)phenylester, Smp. (C-Ch) 65,5°C, Phasenübergang (S_{C}*-Ch) 43,5°C, Klp. (Ch-I) 138,5°C;
(S)-4-(6-Heptenyloxy)benzoesäure-4-(5-[6-methyloctyl] -2-pyrimidinyl)phenylester, Smp. (C-S_{C}*) 45°C, Phasenübergang (S_{C}*-Ch) 48°C, Klp. (Ch-I) 144°C;
(S)-4-(7-Octenyloxy)benzoesäure-4-(5-[6-methyloctyl]-2-pyrimidinyl)phenylester, Smp. (C-S_{C}*) 50°C, Phasenübergang (S_{C}*-Ch) 60°C, Klp. (Ch-I) 136,5°C;
(S)-4-(8-Nonenyloxy)benzoesäure-4-(5-[6-methyloctyl] -2-pyrimidinyl)phenylester;
(S)-4-(9-Decenyloxy)benzoesäure-4-(5-[6-methyloctyl] -2-pyrimidinyl)phenylester, Smp. (C-S_{C}*) 67°C, Phasenübergang (S_{C}*-Ch) 79,5°C, Klp. (Ch-I) 132°C;
(S)-4-(10-Undecenyloxy)benzoesäure-4-(5-[6-methyloctyl] -2-pyrimidinyl)phenylester, Smp. (C-S_{C}*) 61°C, Phasenübergang (S_{C}*-Ch) 79,5°C, Klp. (Ch-I) 132°C;
(S)-4-(5Z-Heptenyloxy)benzoesäure-4-(5-[6-methyloctyl] -2-pyrimidinyl)phenylester;
(S)-4-(5Z-Octenyl)benzoesäure-4-(5-[6-methyloctyl] -2-pyrimidinyl)phenylester;
(S)-4-(5Z-Nonenyl)benzoesäure-4-(5-[6-methyloctyl] -2-pyrimidinyl)phenylester;
4-(5-Hexenyloxy)benzoesäure-4-butyloxyphenylester;
4-(5-Hexenyloxy)benzoesäure-4-pentyloxyphenylester;
4-(5-Hexenyloxy)benzoesäure-4-hexyloxyphenylester;
4-(5-Hexenyloxy)benzoesäure-4-heptyloxyphenylester;
4-(5-Hexenyloxy)benzoesäure-4-octyloxyphenylester;
4-(5-Hexenyloxy)benzoesäure-4-nonyloxyphenylester;
4-(6-Heptenyloxy)benzoesäure-4-butyloxyphenylester;
4-(6-Heptenyloxy)benzoesäure-4-pentyloxyphenylester;
4-(6-Heptenyloxy)benzoesäure-4-hexyloxyphenylester;
4-(6-Heptenyloxy)benzoesäure-4-heptyloxyphenylester;
4-(6-Heptenyloxy)benzoesäure-4-octyloxyphenylester;
4-(6-Heptenyloxy)benzoesäure-4-nonyloxyphenylester;
4-(7-Octenyloxy)benzoesäure-4-butyloxyphenylester;
4-(7-Octenyloxy)benzoesäure-4-pentyloxyphenylester;
4-(7-Octenyloxy)benzoesäure-4-hexyloxyphenylester;
4-(7-Octenyloxy)benzoesäure-4-heptyloxyphenylester;
4-(7-Octenyloxy)benzoesäure-4-octyloxyphenylester;
4-(7-Octenyloxy)benzoesäure-4-nonyloxyphenylester;
4-(8-Nonenyloxy)benzoesäure-4-butyloxyphenylester;
4-(8-Nonenyloxy)benzoesäure-4-pentyloxyphenylester;
4-(8-Nonenyloxy)benzoesäure-4-hexyloxyphenylester;
4-(8-Nonenyloxy)benzoesäure-4-heptyloxyphenylester;
4-(8-Nonenyloxy)benzoesäure-4-octyloxyphenylester;
4-(9-Decenyloxy)benzoesäure-4-butyloxyphenylester;
4-(9-Decenyloxy)benzoesäure-4-pentyloxyphenylester;
4-(9-Decenyloxy)benzoesäure-4-hexyloxyphenylester;
4-(9-Decenyloxy)benzoesäure-4-heptyloxyphenylester;
4-(10-Undecenyloxy)benzoesäure-4-butyloxyphenylester;
4-(10-Undecenyloxy)benzoesäure-4-pentyloxyphenylester;
4-(10-Undecenyloxy)benzoesäure-4-hexyloxyphenylester;
4-(10-Undecenyloxy)benzoesäure-4-heptyloxyphenylester;
4ʹ-(5-Hexenyloxy)-4-biphenylcarbonsäure-4-butyloxyphenylester;
4ʹ-(5-Hexenyloxy)-4-biphenylcarbonsäure-4-pentyloxyphenylester;
4ʹ-(5-Hexenyloxy)-4-biphenylcarbonsäure-4-hexyloxyphenylester;
4ʹ-(5-Hexenyloxy)-4-biphenylcarbonsäure-4-heptyloxyphenylester:
4ʹ-(6-Heptenyloxy)-4-biphenylcarbonsäure-4-butyloxyphenylester;
4ʹ-(6-Heptenyloxy)-4-biphenylcarbonsäure-4-pentyloxyphenylester;
4ʹ-(6-Heptenyloxy)-4-biphenylcarbonsäure-4-hexyloxyphenylester;
4ʹ-(6-Heptenyloxy)-4-biphenylcarbonsäure-4-heptyloxyphenylester;
4-(5-Hexenyloxy)benzoesäure-4ʹ-butyloxy-4-biphenylylester;
4-(5-Hexenyloxy)benzoesäure-4ʹ-pentyloxy-4-biphenylylester;
4-(5-Hexenyloxy)benzoesäure-4ʹ-hexyloxy-4-biphenylylester;
4-(5-Hexenyloxy)benzoesäure-4ʹ-heptyloxy-4-biphenylylester;
4-(-6-Heptenyloxy)benzoesäure-4ʹ-butyloxy-4-biphenylylester;
4-( 6-Heptenyloxy)benzoesäure-4ʹ-pentyloxy-4-biphenylylester;
4-( 6-Heptenyloxy)benzoesäure-4ʹ-hexyloxy-4-biphenylylester;
4-( 6-Heptenyloxy)benzoesäure-4ʹ-heptyloxy-4-biphenylylester;
4-(5-Hexenyloxy)benzoesäure-4-(5-hexyl-2-pyrimidinyl)phenylester;
4-(5-Hexenyloxy)benzoesäure-4-(5-heptyl-2-pyrimidinyl)phenylester;
4-(5-Hexenyloxy)benzoesäure-4-(5-octyl-2-pyrimidinyl)phenylester;
4-(6-Heptenyloxy)benzoesäure-4-(5-hexyl-2-pyrimidinyl)phenylester;
4-(6-Heptenyloxy)benzoesäure-4-(5-heptyl-2-pyrimidinyl)phenylester;
4-(6-Heptenyloxy)benzoesäure-4-(5-octyl-2-pyrimidinyl)phenylester;
4-(7-Octenyloxy)benzoesäure-4-(5-hexyl-2-pyrimidinyl)phenylester;
4-(7-Octenyloxy)benzoesäure-4-(5-heptyl-2-pyrimidinyl)phenylester;
4-(7-Octenyloxy)benzoesäure-4-(5-octyl-2-pyrimidinyl)phenylester;
4-(8-Nonenyloxy)benzoesäure-4-(5-hexyl-2-pyrimidinyl)phenylester;
4-(8-Nonenyloxy)benzoesäure-4-(5-heptyl-2-pyrimidinyl)phenylester;
4-(8-Nonenyloxy)benzoesäure-4-(5-octyl-2-pyrimidinyl)phenylester;
4-(9-Decenyloxy)benzoesäure-4-(5-hexyl-2-pyrimidinyl)phenylester;
4-(9-Decenyloxy)benzoesäure-4-(5-heptyl-2-pyrimidinyl)phenylester;
4-(9-Decenyloxy)benzoesäure-4-(5-octyl-2-pyrimidinyl)phenylester;
4-(10-Undecenyloxy)benzoesäure-4-(5-hexyl-2-pyrimidinyl)phenylester;
4-(10-Undecenyloxy)benzoesäure-4-(5-heptyl-2-pyrimidinyl)phenylester;
4-(10-Undecenyloxy)benzoesäure-4-(5-octyl-2-pyrimidinyl)phenylester;
trans-4-(5-Hexenyl)cyclohexancarbonsäure-4-(5-nonyl-2-pyrimidinyl)phenylester;
trans-4-(5-Hexenyl)cyclohexancarbonsäure-4-(5-decyl-2-pyrimidinyl)phenylester;
trans-4-(6-Heptenyl)cyclohexancarbonsäure-4-(5-octyl-2-pyrimidinyl)phenylester;
trans-4-(6-Heptenyl)cyclohexancarbonsäure-4-(5-nonyl-2-pyrimidinyl)phenylester;
trans-4-(6-Heptenyl)cyclohexancarbonsäure-4-(5-decyl-2-pyrimidinyl)phenylester;
trans-4-(7-Octenyl)cyclohexancarbonsäure-4-(5-octyl-2-pyrimidinyl)phenylester;
trans-4-(7-Octenyl)cyclohexancarbonsäure-4-(5-nonyl-2-pyrimidinyl)phenylester;
trans-4-(7-Octenyl)cyclohexancarbonsäure-4-(5-decyl-2-pyrimidinyl)phenylester;
4-(9-Decenyloxy)benzoesäure-4-(trans-5-nonyl-m-dioxan-2-yl)phenylester;
4-(9-Decenyloxy)benzoesäure-4-(trans-5-decyl-m-dioxan-2-yl)phenylester;
4-(10-Undecenyloxy)benzoesäure-4-(trans-5-octyl-m-dioxan-2-yl)phenylester;
4-(10-Undecenyloxy)benzoesäure-4-(trans-5-nonyl-m-dioxan-2-yl)phenylester, Smp. (C-S_{C}) 75,7°C, Phasenübergänge (S-S_{C}) 43,5°C, (S_{C}-N) 111°C, Klp. (N-I) 149°C;
4-(10-Undecenyloxy)benzoesäure-4-(trans-5-decyl-m-dioxan-2-yl)phenylester, Smp. (C-S_{C}) 75,5°C, Phasenübergänge (S-S_{C}) 39,5°, (S_{C}-N) 116,5°C, Klp. (N-I) 147,5°C;
4-(11-Dodecenyloxy)benzoesäure-4-(trans-5-octyl-m-dioxan-2-yl)phenylester;
4-(11-Dodecenyloxy)benzoesäure-4-(trans-5-nonyl-m-dioxan-2-yl)phenylester, Smp. (C-S_{C}) 78,2°C, Phasenübergänge (S-S_{C}) 44°C, (S_{C}-N) 113,5°C, Klp. (N-I) 145°C;
4-(11-Dodecenyloxy)benzoesäure-4-(trans-5-decyl-m-dioxan-2-yl)phenylester, Smp. (C-S_{C}) 78,2°C, Phasenübergänge (S-S_{C}) 39,5°C, (S_{C}-N) 119°C, Klp. (N-I) 143°C;
(S)-4-(5-Hexenyl)benzoesäure-5-[4-(2-methylbutyloxy)phenyl]pyrazinylester;
(S)-4-(6-Heptenyl)benzoesäure-5-[4-(2-methylbutyloxy)phenyl]pyrazinylester;
(S)-4-(7-Octenyl)benzoesäure-5-[4-(2-methylbutyloxy)-phenyl]pyrazinylester;
(S)-4-(8-Nonenyl)benzoesäure-5-[4-(2-methylbutyloxy)phenyl]pyrazinylester;
(S)-4-(9-Decenyl)benzoesäure-5-[4-(2-methylbutyloxy)phenyl]pyrazinylester;
(S)-4-(10-Undecenyl)benzoesäure-5-[4-(2-methylbutyloxy)phenyl]pyrazinylester;
(S)-4-(5-Hexenyl)benzoesäure-5-[4-(4-methylhexyloxy)phenyl]pyrazinylester;
(S)-4-(6-Heptenyl)benzoesäure-5-[4-(4-methylhexyloxy)phenyl]pyrazinylester;
(S)-4-(7-Octenyl)benzoesäure-5-[4-(4-methylhexyloxy)phenyl]pyrazinylester;
(S)-4-(8-Nonenyl)benzoesäure-5-[4-(4-methylhexyloxy)phenyl]pyrazinylester;
(S)-4-(9-Decenyl)benzoesäure-5-[4-(4-methylhexyloxy)phenyl]pyrazinylester;
(S)-4-(10-Undecenyl)benzoesäure-5-[4-(4-methylhexyloxy)phenyl]pyrazinylester;
(S)-4-(5-Hexenyl)benzoesäure-5-[4-(6-methyloctyloxy)phenyl]pyrazinylester;
(S)-4-(6-Heptenyl)benzoesäure-5-[4-(6-methyloctyloxy)phenyl]pyrazinylester;
(S)-4-(7-Octenyl)benzoesäure-5-[4-(6-methyloctyloxy)phenyl]pyrazinylester;
(S)-4-(8-Nonenyl)benzoesäure-5-[4-(6-methyloctyloxy)phenyl]pyrazinylester;
(S)-4-(9-Decenyl)benzoesäure-5-[4-(6-methyloctyloxy)phenyl]pyrazinylester;
(S)-4-(10-Undecenyl)benzoesäure-5-[4-(6-methyloctyloxy)phenyl]pyrazinylester;
4-(5-Hexenyl)benzoesäure-5-(4-octyloxyphenyl)pyrazinylester;
4-(6-Heptenyl)benzoesäure-5-(4-octyloxyphenyl)pyrazinylester;
4-(7-Octenyl)benzoesäure-5-(4-octyloxyphenyl)pyrazinylester;
4-(8-Nonenyl)benzoesäure-5-(4-octyloxyphenyl)pyrazinylester;
4-(9-Decenyl)benzoesäure-5-(4-octyloxyphenyl)pyrazinylester;
4-(10-Undecenyl)benzoesäure-5-(4-octyloxyphenyl)pyrazinylester;
sowie die optischen Antipoden der optisch aktiven Verbindungen.

### Beispiel 2

Ein Gemisch von 0,5 g (S)-4-(6-Methylhexyloxy)benzoesäure, 10 ml Thionylchlorid (Ueberschuss) und 40 ml Toluol wurde 1 Stunde zum Sieden erhitzt. Anschliessend wurde das Lösungsmittel und überschüssiges Thionylchlorid abdestilliert und der Rückstand zweimal in je 25 ml Toluol aufgenommen und eingeengt.

Das erhaltene, rohe (S)-4-(6-Methylhexyloxy)benzoesäurechlorid wurde in 40 ml Toluol gelöst und dann zu einer Lösung von 0,53 g 4-(9-Decenyloxy)phenol in 5 ml Pyridin zugetropft. Das Reaktionsgemisch wurde über Nacht bei Raumtemperatur gerührt, dann auf Eiswasser gegossen und dreimal mit je 50 ml Diäthyläther extrahiert. Der Extrakt wurde mit 25 ml 3N Salzsäure gewaschen, dann mit 25 ml 2N Natriumcarbonat-Lösung und mehrmals mit Wasser gewaschen, über Magnesiumsulfat getrocknet und eingeengt. Chromatographie des so erhaltenen Rohproduktes an Kieselgel mit Toluol und Umkristallisation aus Methanol bei 0°C ergab reinen (S)-4-(4-Methylhexyloxy)benzoesäure-4 -(9-decenyloxy)phenylester; Smp. (C-S_{C}*) 25°C, Phasenübergang (S_{C}*-Ch) 40°C, Klp. (Ch-I) 56°C.

Das als Ausgangsmaterial verwendete 4-(9-Decenyloxy)phenol wurde wie folgt hergestellt:
a) Ein Gemisch von 18 g 9-Decen-1-yl-p-tosylat, 12,8 g Hydrochinon, 3,6 g Kaliumhydroxid, 1 ml Wasser und 75 ml Aethanol wurde über Nacht unter Rückfluss erhitzt. Anschliessend wurde das abgekühlte Reaktionsgemisch auf Eiswasser gegossen und dreimal mit je 50 ml Diäthyläther extrahiert. Die organischen Phasen wurden mit 500 ml Wasser gewaschen, über Magnesiumsulfat getrocknet und eingeengt. Chromatographie des Rückstandes an Kieselgel mit Toluol/Aethylacetat (Vol. 4:1) ergab 7,5 g 4-(9-Decenyloxy)phenol; Smp. 54-55°C.

In analoger Weise können folgende Verbindungen hergestellt werden:
(S)-4-(2-Methylbutyloxy)benzoesäure-4-(4-pentenyloxy) phenylester, Smp. (C-I) 55°C;
(S)-4-(2-Methylbutyloxy)benzoesäure-4-(5-hexenyloxy) phenylester, Smp. (C-I) 50,5°C, Klp. (Ch-I) 31°C;
(S)-4-(2-Methylbutyloxy)benzoesäure-4-(6-heptenyloxy) phenylester, Smp. (C-I) 51,5°C, Klp. (Ch-I) 44°C;
(S)-4-(2-Methylbutyloxy)benzoesäure-4-(7-octenyloxy) phenylester, Smp. (C-I) 51°C, Klp. (Ch-I) 38°C;
(S)-4-(2-Methylbutyloxy)benzoesäure-4-(8-nonenyloxy) phenylester;
(S)-4-(2-Methylbutyloxy)benzoesäure-4-(9-decenyloxy) phenylester, Smp. (C-I) 49°C, Klp. (Ch-I) 37,5°C;
(S)-4-(2-Methylbutyloxy)benzoesäure-4-(10-undecenyloxy) phenylester, Smp. (C-Ch) 45,5°C, Klp. (Ch-I) 45°C;
(S)-4-(2-Methylbutyloxy)benzoesäure-4-(5Z-octenyloxy) phenylester;
(S)-4-(4-Methylhexyloxy)benzoesäure-4-(4-pentenyloxy) phenylester, Smp. (C-Ch) 41°C, Phasenübergang (S_{C}*-Ch) 34°C, Klp. (Ch-I) 57,5°C;
(S)-4-(4-Methylhexyloxy)benzoesäure-4-(5-hexenyloxy) phenylester, Smp. (C-Ch) 38°C, Phasenübergang (S_{C}*-Ch) 34,5°C, Klp. (Ch-I) 49,5°C;
(S)-4-(4-Methylhexyloxy)benzoesäure-4-(6-heptenyloxy) phenylester, Smp. (C-S_{C}*) 32,5°C, Phasenübergang (S_{C}*-Ch) 36,5°C, Klp. (Ch-I) 61°C;
(S)-4-(4-Methylhexyloxy)benzoesäure-4-(7-octenyloxy) phenylester, Smp. (C-S_{C}*) 29,5°C, Phasenübergang (S_{C}*-Ch) 40°C, Klp. (Ch-I) 55,5°C;
(S)-4-(4-Methylhexyloxy)benzoesäure-4-(8-nonenyloxy) phenylester;
(S)-4-(4-Methylhexyloxy)benzoesäure-4-(10-undecenyloxy) phenylester, Smp. (C-S_{C}*) 34°C, Phasenübergang (S_{C}*-Ch) 41,5°C, Klp. (Ch-I) 61°C;
(S)-4-(4-Methylhexyloxy)benzoesäure-4-(5Z-heptenyloxy) phenylester;
(S)-4-(4-Methylhexyloxy)benzoesäure-4-(5Z-octenyloxy) phenylester, Smp. (C-S_{C}*) 22°C, Phasenübergang (S_{C}*-Ch) 40,5°C, Klp. (Ch-I) 46°C;
(S)-4-(4-Methylhexyloxy)benzoesäure-4-(5Z-nonenyloxy) phenylester;
(S)-4-(4-Methylhexyloxy)benzoesäure-4-(5Z-decenyloxy) phenylester;
(S)-4-(4-Methylhexyloxy)benzoesäure-4-(5Z-undecenyloxy) phenylester;
(S)-4-(1-Methylheptyloxy)benzoesäure-4-(4-pentenyloxy) phenylester;
(S)-4-(1-Methylheptyloxy)benzoesäure-4-(5-hexenyloxy) phenylester;
(S)-4-(1-Methylheptyloxy)benzoesäure-4-(6-heptenyloxy) phenylester;
(S)-4-(1-Methylheptyloxy)benzoesäure-4-(7-octenyloxy) phenylester;
(S)-4-(1-Methylheptyloxy)benzoesäure-4-(8-nonenyloxy) phenylester;
(S)-4-(1-Methylheptyloxy)benzoesäure-4-(9-decenyloxy) phenylester;
(S)-4-(1-Methylheptyloxy)benzoesäure-4-(10-undecenyloxy) phenylester;
(S)-4-(1-Methylheptyloxy)benzoesäure-4-(5Z-heptenyloxy) phenylester;
(S)-4-(1-Methylheptyloxy)benzoesäure-4-(5Z-octenyloxy) phenylester;
(S)-4-(1-Methylheptyloxy)benzoesäure-4-(5Z-nonenyloxy) phenylester;
(S)-4-(1-Methylheptyloxy)benzoesäure-4-(5Z-decenyloxy) phenylester;
(S)-4-(1-Methylheptyloxy)benzoesäure-4-(5Z-undecenyloxy) phenylester;
(S)-4-(6-Methyloctyloxy)benzoesäure-4-(4-pentenyloxy) phenylester, Smp. (C-S_{C}*) 48°C, Phasenübergang (S_{C}*-Ch) 53,5°C, Klp. (Ch-I) 66°C;
(S)-4-(6-Methyloctyloxy)benzoesäure-4-(5-hexenyloxy) phenylester, Smp. (C-S_{C}*) 38,5°C, Phasenübergang (S_{C}*-Ch) 51°C, Klp. (Ch-I) 59°C;
(S)-4-(6-Methyloctyloxy)benzoesäure-4-(6-heptenyloxy) phenylester, Smp. (C-S_{C}*) 39°C, Phasenübergang (S_{C}*-Ch) 56°C, Klp. (Ch-I) 68,5°C;
(S)-4-(6-Methyloctyloxy)benzoesäure-4-(7-octenyloxy) phenylester, Smp. (C-S_{C}*) 37,5°C. Phasenübergang (S_{C}*-Ch) 57°C, Klp. (Ch-I) 65°C;
(S)-4-(6-Methyloctyloxy)benzoesäure-4-(5-nonenyloxy) phenylester;
(S)-4-(6-Methyloctyloxy)benzoesäure-4-(9-decenyloxy) phenylester, Smp. (C-S_{C}*) 45°C, Phasenübergang (S_{C}*-Ch) 60°C, Klp. (Ch-I) 66,5°C;
(S)-4-(6-Methyloctyloxy)benzoesäure-4-(10-undecenyloxy) phenylester, Smp. (C-S_{C}*) 44,5°, Phasenübergang (S_{C}*-Ch) 62.5°C. Klp. (Ch-I) 70°C;
(S)-4-(6-Methyloctyloxy)benzoesäure-4-(5Z-heptenyloxy) phenylester;
(S)-4-(6-Methyloctyloxy)benzoesäure-4-(5Z-octenyloxy) phenylester, Smp. (C-S_{C}*) 34°C, Phasenübergang (S_{C}*-Ch) 55,5°C, Klp. (Ch-I) 56°C;
(S)-4-(6-Methyloctyloxy)benzoesäure-4-(5Z-nonenyloxy) phenylester;
(S)-4-(6-Methyloctyloxy)benzoesäure-4-(5Z-decenyloxy) phenylester;
(S)-4-(6-Methyloctyloxy)benzoesäure-4-(5Z-undecenyloxy) phenylester;
(S)-4'-(2-Methylbutyl)-4-biphenylcarbonsäure -4-(4-pentenyloxy)phenylester, Smp. (C-S_{C}*) 73°C, Phasenübergang (S-S_{C}*) 56,5°C, Phasenübergang (S_{C}*-Ch) 78,5°C, Klp. (Ch-I) 169°C;
(S)-4'-(2-Methylbutyl)-4-biphenylcarbonsäure -4-(5-hexenyloxy)phenylester, Smp. (C-S_{C}*) 66°C, Phasenübergang (S-S_{C}*) 52°C, Phasenübergang (S_{C}*-Ch) 79°C, Klp. (Ch-I) 153,5°C;
(S)-4'-(2-Methylbutyl)-4-biphenylcarbonsäure -4-(6-heptenyloxy)phenylester, Smp. (C-S_{C}*) 59°C, Phasenübergang (S-S_{C}*) 37°C, Phasenübergang (S_{C}*-Ch) 77°C, Klp. (Ch-I) 157°C;
(S)-4'-(2-Methylbutyl)-4-biphenylcarbonsäure -4-(7-octenyloxy)phenylester, Smp. (C-S_{C}*) 72°C, Phasenübergang (S_{C}*-Ch) 80,5°C, Klp. (Ch-I) 148°C;
(S)-4'-(2-Methylbutyl)-4-biphenylcarbonsäure -4-(8-nonenyloxy)phenylester;
(S)-4'-(2-Methylbutyl)-4-biphenylcarbonsäure -4-(9-decenyloxy)phenylester, Smp. (C-S_{C}*) 70°C, Phasenübergang (S_{C}*-Ch) 83°C, Klp. (Ch-I) 141,5°C;
(S)-4'-(2-Methylbutyl)-4-biphenylcarbonsäure -4-(10-undecenyloxy)phenylester, Smp. (C-S_{C}*) 67,5°C, Phasenübergang (S_{C}*-Ch) 84,5°C, Klp. (Ch-I) 142°C;
(S)-4'-(3-Methylpentyl)-4-biphenylcarbonsäure -4-(4-pentenyloxy)phenylester, Smp. (C-S_{C}*) 96°C, Phasenübergang (S-S_{C}*) 74,5°C, Phasenübergang (S_{C}*-S_{A}) 125,5°C, Phasenübergang (S_{A}-Ch) 135°C, Klp. (Ch-I) 168,5°C;
(S)-4'-(3-Methylpentyl)-4-biphenylcarbonsäure -4-(5-hexenyloxy)phenylester, Smp. (C-S_{C}*) 92°C, Phasenübergang (S-S_{C}*) 68,5°C, Phasenübergang (S_{C}*-S_{A}) 122°C, Phasenübergang (S_{A}-Ch) 128°C, Klp. (Ch-I) 155°C;
(S)-4'-(3-Methylpentyl)-4-biphenylcarbonsäure -4-(6-heptenyloxy)phenylester, Smp. (C-S_{C}*) 86°C, Phasenübergang (S-S_{C}*) 47°C, Phasenübergang (S_{C}*-S_{A}) 123°C, Phasenübergang (S_{A}-Ch) 129°C, Klp. (Ch-I) 158,5°C;
(S)-4'-(3-Methylpentyl)-4-biphenylcarbonsäure -4-(7-octenyloxy)phenylester, Smp. (C-S_{C}*) 78°C, Phasenübergang (S_{C}*-S_{A}) 119,5°C, Phasenübergang (S_{A}-Ch) 127,5°C, Klp. (Ch-I) 150°C;
(S)-4'-(3-Methylpentyl)-4-biphenylcarbonsäure -4-(8-nonenyloxy)phenylester;
(S)-4'-(3-Methylpentyl)-4-biphenylcarbonsäure -4-(9-decenyloxy)phenylester, Smp. (C-S_{C}*) 73°C. Phasenübergang (S_{C}*-S_{A}) 117,5°C, Phasenübergang (S_{A}-Ch) 130,5°C, Klp. (Ch-I) 146°C;
(S)-4'-(3-Methylpentyl)-4-biphenylcarbonsäure -4-(10-undecenyloxy)phenylester, Smp. (C-S_{C}*) 77,5°C, Phasenübergang (S_{C}*-S_{A}) 114°C, Phasenübergang (S_{A}-Ch) 131,5°C, Klp. (Ch-I) 146,5°C;
(S)-4'-(3-Methylpentyl)-4-biphenylcarbonsäure -4-(5Z-heptenyloxy)phenylester;
(S)-4'-(3-Methylpentyl)-4-biphenylcarbonsäure -4-(5Z-octenyloxy)phenylester;
(S)-4'-(3-Methylpentyl)-4-biphenylcarbonsäure -4-(5Z-nonenyloxy)phenylester;
(S)-4'-(3-Methylpentyl)-4-biphenylcarbonsäure -4-(5Z-decenyloxy)phenylester;
(S)-4'-(2-Methylbutyloxy)-4-biphenylcarbonsäure -4-(4-pentenyloxy)phenylester, Smp. (C-S_{C}*) 115°C, Phasenübergang (S_{C}*-S_{A}) 141°C, Phasenübergang (S_{A}-Ch) 161°C, Klp. (Ch-I) 189°C;
(S)-4'-(2-Methylbutyloxy)-4-biphenylcarbonsäure -4-(5-hexenyloxy)phenylester, Smp. (C-S_{C}*) 96°C, Phasenübergang (S_{C}*-S_{A}) 137°C, Phasenübergang (S_{A}-Ch) 154,5°C, Klp. (Ch-I) 176°C;
(S)-4'-(2-Methylbutyloxy)-4-biphenylcarbonsäure -4-(6-heptenyloxy)phenylester, Smp. (C-S_{C}*) 97,5°C, Phasenübergang (S_{C}*-S_{A}) 133°C, Phasenübergang (S_{A}-Ch) 154,5°C, Klp. (Ch-I) 177,5°C;
(S)-4'-(2-Methylbutyloxy)-4-biphenylcarbonsäure -4-(7-octenyloxy)phenylester, Smp. (C-S_{C}*) 97,5°C, Phasenübergang (S_{C}*-S_{A}) 130,5°C, Phasenübergang (S_{A}-Ch) 153,5°C, Klp. (Ch-I) 169,5°C;
(S)-4ʹ-(2-Methylbutyloxy)-4-biphenylcarbonsäure -4-(8-nonenyloxy)phenylester;
(S)-4ʹ-(2-Methylbutyloxy)-4-biphenylcarbonsäure -4-(9-decenyloxy)phenylester, Smp. (C-S_{C}*) 99,5°C, Phasenübergang (S_{C}*-S_{A}) 126°C, Phasenübergang (S_{A}-Ch) 154,5°C, Klp. (Ch-I) 165°C;
(S)-4ʹ-(2-Methylbutyloxy)-4-biphenylcarbonsäure -4-(10-undecenyloxy)phenylester, Smp. (C-S_{C}*) 97,5°C, Phasenübergang (S_{C}*-S_{A}) 124,5°C, Phasenübergang (S_{A}-Ch) 154,5°C, Klp. (Ch-I) 164°C;
(S)-4ʹ-(2-Methylbutyloxy)-4-biphenylcarbonsäure -4-(5Z-heptenyloxy)phenylester;
(S)-4ʹ-(2-Methylbutyloxy)-4-biphenylcarbonsäure -4-(5Z-octenyloxy)phenylester;
(S)-4ʹ-(2-Methylbutyloxy)-4-biphenylcarbonsäure -4-(5Z-nonenyloxy)phenylester;
(S)-4ʹ-(2-Methylbutyloxy)-4-biphenylcarbonsäure -4-(5Z-decenyloxy)phenylester;
(S)-4ʹ-(2-Methylbutyloxy)-4-biphenylcarbonsäure -4-(5Z-undecenyloxy)phenylester;
(S)-4ʹ-(4-Methylhexyloxy)-4-biphenylcarbonsäure -4-(7-octenyloxy)phenylester;
(S)-4ʹ-(4-Methylhexyloxy)-4-biphenylcarbonsäure -4-(8-nonenyloxy)phenylester;
(S)-4ʹ-(4-Methylhexyloxy)-4-biphenylcarbonsäure -4-(9-decenyloxy)phenylester;
(S)-4ʹ-(4-Methylhexyloxy)-4-biphenylcarbonsäure -4-(5Z-octenyloxy)phenylester;
(S)-4ʹ-(1-Methylheptyloxy)-4-biphenylcarbonsäure -4-(7-octenyloxy)phenylester;
(S)-4ʹ-(1-Methylheptyloxy)-4-biphenylcarbonsäure -4-(8-nonenyloxy)phenylester;
(S)-4ʹ-(1-Methylheptyloxy)-4-biphenylcarbonsäure -4-(9-decenyloxy)phenylester;
(S)-4ʹ-(1-Methylheptyloxy)-4-biphenylcarbonsäure -4-(5Z-octenyloxy)phenylester;
(S)-4-(2-Methylbutyloxy)benzoesäure-4-(7-octenyloxy) -4ʹ-biphenylylester;
(S)-4-(2-Methylbutyloxy)benzoesäure-4-(9-decenyloxy) -4ʹ-biphenylylester;
(S)-4-(2-Methylbutyloxy)benzoesäure-4-(5Z-octenyloxy) -4ʹ-biphenylylester;
(S)-4-(4-Methylhexyloxy)benzoesäure-4-(7-octenyloxy) -4ʹ-biphenylylester;
(S)-4-(4-Methylhexyloxy)benzoesäure-4-(9-decenyloxy) -4ʹ-biphenylylester;
(S)-4-(4-Methylhexyloxy)benzoesäure-4-(5Z-octenyloxy) -4ʹ-biphenylylester;
(S)-4-(6-Methyloctyloxy)benzoesäure-4-(7-octenyloxy) -4ʹ-biphenylylester;
(S)-4-(6-Methyloctyloxy)benzoesäure-4-(9-decenyloxy) -4ʹ-biphenylylester;
(S)-4-(6-Methyloctyloxy)benzoesäure-4-(5Z-octenyloxy) -4ʹ-biphenylylester;
(S)-4-(1-Methylheptyloxy)benzoesäure-4-(7-octenyloxy) -4ʹ-biphenylylester;
(S)-4-(1-Methylheptyloxy)benzoesäure-4-(8-nonenyl) -4ʹ-biphenylylester;
(S)-4-(1-Methylheptyloxy)benzoesäure-4-(9-decenyl) -4ʹ-biphenylylester;
(S)-4-(1-Methylheptyloxy)benzoesäure-4-(5Z-octenyl) -4ʹ-biphenylylester;
4-Hexyloxybenzoesäure-4-(5-hexenyloxy)phenylester;
4-Heptyloxybenzoesäure-4-(5-hexenyloxy)phenylester;
4-Octyloxybenzoesäure-4-(5-hexenyloxy)phenylester;
4-Nonyloxybenzoesäure-4-(5-hexenyloxy)phenylester;
4-Decyloxybenzoesäure-4-(5-hexenyloxy)phenylester;
4-Hexyloxybenzoesäure-4-(6-heptenyloxy)phenylester;
4-Heptyloxybenzoesäure-4-(6-heptenyloxy)phenylester;
4-Octyloxybenzoesäure-4-(6-heptenyloxy)phenylester;
4-Nonyloxybenzoesäure-4-(6-heptenyloxy)phenylester;
4-Pentyloxybenzoesäure-4(7-octenyloxy)phenylester;
4-Hexyloxybenzoesäure-4(7-octenyloxy)phenylester;
4-Heptyloxybenzoesäure-4(7-octenyloxy)phenylester;
4-Octyloxybenzoesäure-4(7-octenyloxy)phenylester;
4-Pentyloxybenzoesäure-4-(8-nonenyloxy)phenylester;
4-Hexyloxybenzoesäure-4-(8-nonenyloxy)phenylester;
4-Heptyloxybenzoesäure-4-(8-nonenyloxy)phenylester;
4-Octyloxybenzoesäure-4-(8-nonenyloxy)phenylester;
4-Pentyloxybenzoesäure-4-(9-decenyloxy)phenylester;
4-Hexyloxybenzoesäure-4-(9-decenyloxy)phenylester;
4-Heptyloxybenzoesäure-4-(9-decenyloxy)phenylester;
4-Butyloxybenzoesäure-4-(10-undecenyloxy)phenylester;
4-Pentyloxybenzoesäure-4-(10-undecenyloxy)phenylester;
4-Hexyloxybenzoesäure-4-(10-undecenyloxy)phenylester;
4ʹ-Pentyl-4-biphenylcarbonsäure-4-(4-pentenyloxy)phenylester;
4ʹ-Hexyl-4-biphenylcarbonsäure-4-(4-pentenyloxy)phenylester;
4ʹ-Heptyl-4-biphenylcarbonsäure-4-(4-pentenyloxy)phenylester;
4ʹ-Octyl-4-biphenylcarbonsäure-4-(4-pentenyloxy)phenylester;
4ʹ-Pentyl-4-biphenylcarbonsäure-4-(5-hexenyloxy)phenylester;
4ʹ-Hexyl-4-biphenylcarbonsäure-4-(5-hexenyloxy)phenylester;
4ʹ-Heptyl-4-biphenylcarbonsäure-4-(5-hexenyloxy)phenylester;
4ʹ-Octyl-4-biphenylcarbonsäure-4-(5-hexenyloxy)phenylester;
4ʹ-Butyl-4-biphenylcarbonsäure-4-(6-heptentloxy)phenylester;
4ʹ-Pentyl-4-biphenylcarbonsäure-4-(6-heptenyloxy)phenylester;
4ʹ-Hexyl-4-biphenylcarbonsäure-4-(6-heptenyloxy)phenylester;
4ʹ-Heptyl-4-biphenylcarbonsäure-4-(6-heptenyloxy)phenylester;
4ʹ-Butyl-4-biphenylcarbonsäure-4-(7-octenyloxy)phenylester;
4ʹ-Pentyl-4-biphenylcarbonsäure-4-(7-octenyloxy)phenylester;
4ʹ-Hexyl-4-biphenylcarbonsäure-4-(7-octenyloxy)phenylester;
4ʹ-Heptyl-4-biphenylcarbonsäure-4-(7-octenyloxy)phenylester;
4ʹ-Butyl-4-biphenylcarbonsäure-4-(8-nonenyloxy)phenylester;
4ʹ-Pentyl-4-biphenylcarbonsäure-4-(8-nonenyloxy)phenylester;
4ʹ-Hexyl-4-biphenylcarbonsäure-4-(8-nonenyloxy)phenylester;
4ʹ-Pentyl-4-biphenylcarbonsäure-4-(9-decenyloxy)phenylester;
sowie die optischen Antipoden der optisch aktiven Verbindungen.

### Beispiel 3

Ein Gemisch von 0,66 g 9-Decen-1-yl-p-tosylat, 0,5 g (S)-4-(5-[5-Methylheptyl] -2-pyrimidinyl)phenol, 0,97 g Kaliumcarbonat und 50 ml absolutem Butanon wurde über Nacht unter Rückfluss erhitzt. Anschliessend wurde das abgekühlte Reaktionsgemisch auf Eiswasser gegossen und dreimal mit je 50 ml Diäthyläther extrahiert. Die organischen Phasen wurden mit 500 ml Wasser gewaschen, über Magnesiumsulfat getrocknet und eingeengt. Chromatographie des Rückstandes an Kieselgel mit Toluol und anschliessende Kugelrohr-Destillation ergab 0,9 g (S)-5-(5-Methylheptyl)-2-(4-[9-decenyloxy] phenyl)pyrimidin; Smp. (C-S_{C}*) 19°C, Phasenübergang (S_{C}*-Ch) 32,5°C, Klp. (Ch-I) 43°C.

Das als Ausgangsmaterial verwendete (S)-4-(5-[5-Methylheptyl]-2-pyrimidinyl)phenol wurde wie folgt hergestellt:
a) Ein Gemisch von 23 g (S)-2-(Methoxymethyliden) -7-methylnonanal, 26,2 g 4-Isopropoxybenzamidin-hydrochlorid und 250 ml absolutem Methanol wurde bei 10°C tropfenweise mit 80 ml einer 5%-iger Lösung von Natriummethylat in Methanol versetzt. Das Reaktionsgemisch wurde über Nacht bei Raumtemperatur gerührt und anschliessend mit konzentrierter Salzsäure sauer gestellt (pH 4-5), filtriert und das Filtrat eingeengt. Der Rückstand wurde in 500 ml Dichlormethan aufgenommen, mehrmals mit Wasser gewaschen, über Natriumsulfat getrocknet und eingeengt. Chromatographie des Rückstandes an Kieselgel mit Hexan/Aethylacetat (Vol. 19:1) und Umkristallisation aus Methanol ergab 22,2 g (S)-2-(4-Isopropoxyphenyl)-5-(5-methylheptyl)pyrimidin; Smp. 47,2-47,7°C.
b) Zu einer Lösung von 22,7 g (S)-2-(4-Isopropoxyphenyl)-5-(5-methylheptyl)pyrimidin, in 300 ml absolutem Dichlormethan wurde innert 1 Stunde bei 0°C unter Argonbegasung eine Lösung von 22,5 ml Titantetrachlorid in 125 ml Dichlormethan zugetropft. Das Reaktionsgemisch wurde 45 Minuten bei 0°C und noch über Nacht bei Raumtemperatur gerührt und anschliessend auf 1500 ml Eiswasser ausgegossen. Die organische Phase wurde abgetrennt und die wässrige Phase zweimal mit je 200 ml Dichlormethan nachextrahiert. Die vereinigten organischen Phasen wurden mehrmals mit Wasser gewaschen, über Natriumsulfat getrocknet und eingeengt. Das rohe (S)-4-(5-[5-Methylheptyl]-2-pyrimidinyl)phenol wurde weiter verwendet ohne zusätzliche Reinigung.

In analoger Weise können folgende Verbindungen hergestellt werden:
(S)-5-(5-Methylheptyl)-2-(4-[5-hexenyloxy] phenyl)pyrimidin, Smp. (C-Ch) 29,5°C, Klp. (Ch-I) 30,5°C;
(S)-5-(5-Methylheptyl)-2-(4-[6-heptenyloxy] phenyl)pyrimidin, Smp. (C-Ch) 35°C, Phasenübergang (S_{C}-Ch) 29°C, Klp. (Ch-I) 45,5°C;
(S)-5-(5-Methylheptyl)-2-(4-[7-octenyloxy] phenyl)pyrimidin, Smp. (C-Ch) 29°C, Phasenübergang (S_{C}*-Ch) 27,5°C, Klp. (Ch-I) 40°C;
(S)-5-(5-Methylheptyl)-2-(4-[8-nonenyloxy] phenyl)pyrimidin;
(S)-5-(5-Methylheptyl)-2-(4-[10-undecenyloxy] phenyl)pyrimidin, Smp. (C-S_{C}*) 17°C, Phasenübergang (S_{C}*-Ch) 37°C, Klp. (Ch-I) 47,5°C;
(S)-5-(5-Methylheptyl)-2-(4-[5Z-heptenyloxy] phenyl)pyrimidin;
(S)-5-(5-Methylheptyl)-2-(4-[5Z-octenyloxy] phenyl)pyrimidin;
(S)-5-(5-Methylheptyl)-2-(4-[5Z-nonenyloxy] phenyl)pyrimidin;
(S)-5-(5-Methylheptyl)-2-(4-[5Z-decenyloxy] phenyl)pyrimidin;
(S)-5-(6-Methyloctyl)-2-(4-[5-hexenyloxy] phenyl)pyrimidin, Smp. (C-Ch) 12,5°C, Klp. (Ch-I) 21°C;
(S)-5-(6-Methyloctyl)-2-(4-[6-heptenyloxy] phenyl)pyrimidin, Smp. (C-S_{C}*) 6,5°C, Phasenübergang (S_{C}*-Ch) 18,5°C, Klp. (Ch-I) 39°C;
(S)-5-(6-Methyloctyl)-2-(4-[7-octenyloxy] phenyl)pyrimidin, Smp. (C-S_{C}*) 4°C, Phasenübergang (S_{C}*-Ch) 14,5°C, Klp. (Ch-I) 32°C;
(S)-5-(6-Methyloctyl)-2-(4-[8-nonenyloxy] phenyl)pyrimidin;
(S)-5-(6-Methyloctyl)-2-(4-[9-decenyloxy] phenyl)pyrimidin, Smp. (C-S_{C}*) 12°C, Phasenübergang (S_{C}*-Ch) 27°C, Klp. (Ch-I) 37,5°C;
(S)-5-(6-Methyloctyl)-2-(4-[10-undecenyloxy] phenyl)pyrimidin, Smp. (C-S_{C}*) 20°C, Phasenübergang (S_{C}*-Ch) 35,5°C, Klp. (Ch-I) 44,5°C;
(S)-5-(6-Methyloctyl)-2-(4-[5Z-octenyloxy] phenyl)pyrimidin;
(S)-5-(6-Methyloctyl)-2-(4-[5Z-nonenyloxy] phenyl)pyrimidin;
(S)-5-(6-Methyloctyl)-2-(4-[5Z-decenyloxy] phenyl)pyrimidin;
(S)-5-(6-Methyloctyl)-2-(4-[5Z-undecenyloxy] phenyl)pyrimidin;
(S)-5-(2-Methylbutyloxy)-2-(4-[7-octenyloxy] phenyl)pyrimidin;
(S)-5-(2-Methylbutyloxy)-2-(4-[8-nonenyloxy] phenyl)pyrimidin;
(S)-5-(2-Methylbutyloxy)-2-(4-[9-decenyloxy] phenyl)pyrimidin;
(S)-5-(2-Methylbutyloxy)-2-(4-[5Z-octenyloxy] phenyl)pyrimidin;
(S)-5-(4-Methylhexyloxy)-2-(4-[7-octenyloxy] phenyl)pyrimidin;
(S)-5-(4-Methylhexyloxy)-2-(4-[8-nonenyloxy] phenyl)pyrimidin;
(S)-5-(4-Methylhexyloxy)-2-(4-[9-decenyloxy] phenyl)pyrimidin;
(S)-5-(4-Methylhexyloxy)-2-(4-[5Z-octenyloxy] phenyl)pyrimidin;
(S)-5-(6-Methyloctyloxy)-2-(4-[7-octenyloxy] phenyl)pyrimidin;
(S)-5-(6-Methyloctyloxy)-2-(4-[8-nonenyloxy] phenyl)pyrimidin;
(S)-5-(6-Methyloctyloxy)-2-(4-[9-decenyloxy] phenyl)pyrimidin;
(S)-5-(6-Methyloctyloxy)-2-(4-[5Z-octenyloxy] phenyl)pyrimidin;
(S)-5-(1-Methylheptyloxy)-2-(4-[9-decenyloxy] phenyl)pyrimidin;
(S)-5-(1-Methylheptyloxy)-2-(4-[5Z-octenyloxy] phenyl)pyrimidin;
(S)-5-(4-[2-Methylbutyl]phenyl)-2-(4-[7-octenyloxy] phenyl)pyrimidin;
(S)-5-(4-[2-Methylbutyl]phenyl)-2-(4-[8-nonenyloxy] phenyl)pyrimidin;
(S)-5-(4-[2-Methylbutyl]phenyl)-2-(4-[9-decenyloxy] phenyl)pyrimidin;
(S)-5-(4-[2-Methylbutyl]phenyl)-2-(4-[5Z-octenyloxy] phenylpyrimidin;
(S)-5-(4-[4-Methylhexyl]phenyl)-2-(4-[7-octenyloxy] phenyl)pyrimidin;
(S)-5-(4-[4-Methylhexyl]phenyl)-2-(4-[8-nonenyloxy] phenyl)pyrimidin;
(S)-5-(4-[4-Methylhexyl]phenyl)-2-(4-[9-decenyloxy] phenyl)pyrimidin;
(S)-5-(4-[4-Methylhexyl]phenyl)-2-(4-[5Z-octenyloxy] phenyl)pyrimidin;
(S)-5-(4-[6-Methyloctyl]phenyl)-2-(4-[7-octenyloxy] phenyl)pyrimidin;
(S)-5-(4-[6-Methyloctyl]phenyl)-2-(4-[8-nonenyloxy] phenyl)pyrimidin;
(S)-5-(4-[6-Methyloctyl]phenyl)-2-(4-[9-decenyloxy] phenyl)pyrimidin;
(S)-5-(4-[6-Methyloctyl]phenyl)-2-(4-[5Z-octenyloxy] phenyl)pyrimidin;
5-Decyl-2-(4-[4-pentenyloxy]phenyl)pyrimidin;
5-Dodecyl-2-(4-[4-pentenyloxy]phenyl)pyrimidin;
5-Decyl-2-(4-[5-hexenyloxy]phenyl)pyrimidin, Smp. (C-S_{A}) 55,5°C, Phasenübergang (S_{C}-S_{A}) 33°C, Klp. (S_{A}-I) 62°C;
5-Dodecyl-2-(4-[5-hexenyloxy]phenyl)pyrimidin;
5-Decyl-2-(4-[5-heptenyloxy]phenyl)pyrimidin;
5-Dodecyl-2-(4-[6-heptenyloxy]phenyl)pyrimidin;
5-Decyl-2-(4-[7-octenyloxy]phenyl)pyrimidin, Smp. (C-S_{C}) 37°C, Phasenübergang (S_{C}-S_{A}) 47°C, Klp. (S_{A}-I) 67,5°C;
5-Undecyl-2-(4-[7-octenyloxy]phenyl)pyrimidin;
5-Dodecyl-2-(4-[7-octenyloxy]phenyl)pyrimidin;
5-Nonyl-2-(4-[8-nonenyloxy]phenyl)pyrimidin;
5-Decyl-2-(4-[8-nonenyloxy]phenyl)pyrimidin, Smp. (C-S_{C}) 32,5°C, Phasenübergang (S_{C}-S_{A}) 55°C, Klp. (S_{A}-I) 72°C;
5-Undecyl-2-(4-[8-nonenyloxy]phenyl)pyrimidin;
5-Dodecyl-2-(4-[8-nonenyloxy]phenyl)pyrimidin;
5-Octyl-2-(4-[9-decenyloxy]phenyl)pyrimidin;
5-Nonyl-2-(4-[9-decenyloxy]phenyl)pyrimidin;
5-Decyl-2-(4-[9-decenyloxy]phenyl)pyrimidin, Smp. (C-S_{C}) 33°C, Phasenübergang (S_{C}-S_{A}) 57°C, Klp. (S_{A}-I) 70°C;
5-Octyl-2-(4-[10-undecenyloxy]phenyl)pyrimidin;
5-Nonyl-2-(4-[10-undecenyloxy]phenyl)pyrimidin;
5-Decyl-2-(4-[10-undecenyloxy]phenyl)pyrimidin, Smp. (C-S_{C}) 36°C, Phasenübergang (S_{C}-S_{A}) 64,5°C, Klp. (S_{A}-I) 72,5°C;
sowie die optischen Antipoden der optisch aktiven Verbindungen

### Beispiel 4

Eine Lösung von 0,9 g 2-(4ʹ-Hydroxy-4-biphenylyl)-5-(4-pentenyl)-m-dioxan und 1,25 g (S)-1-Brom-4-methylhexan in 25 ml N,N-Dimethylformamid wurde mit 1,2 g fein pulverisiertem Kaliumcarbonat versetzt und das Gemisch über Nacht im Oelbad von 60°C gerührt. Die Suspension wurde genutscht und das Filtrat am Vakuum eingeengt. Eine Lösung des Rückstandes in Diäthyläther wurde zweimal mit Wasser gewaschen, über Natriumsulfat getrocknet und eingeengt. Chromatographie des Rohprodukts an 40 g Kieselgel mit Hexan/Aethylacetat (Vol. 23:2) und zweimaliges Umkristallisieren aus Aethylacetat ergab reines (S)-trans-2-[4ʹ-(4-Methylhexyloxy)-4-biphenylyl] -5-(4-pentenyl)-m-dioxan; Phasenübergang (S-S) 99,5°C, Phasenübergang (S-S_{C}*) 127°C, Phasenübergang (S_{C}*-Ch) 130°C, Klp. (Ch-I) 148°C.

Das als Ausgangsmaterial verwendete 2-(4ʹ-Hydroxy-4-biphenylyl)-5-(4-pentenyl)-m-dioxan wurde wie folgt hergestellt:
a) Ein Gemisch auf 21,06 g 4-Biphenylyl-p-tosylat in 120 ml Dichlormethan wurde bei -2°C mit 23,6 ml Titantetrachlorid versetzt. Dann tropft man bei der gleichen Temperatur innert 30 Minuten 9,63 ml (Dichlormethyl)methyläther zu, rührte das Gemisch noch 1 Stunde bei Raumtemperatur und goss es dann auf Eis. Die organische Phase wurde abgetrennt und die wässrige Phase mit Dichlormethan extrahiert. Die vereinigten organischen Phasen wurden mit gesättigter Natriumhydrogencarbonat-Lösung und mit Wasser gewaschen, über Natriumsulfat getrocknet und eingeengt. Umkristallisation des erhaltenen Rohproduktes aus 50 ml Aethylacetat ergab 11,65 g 4ʹ-(p-Tosyloxy)biphenyl-4-carboxaldehyd.
b) Eine Lösung von 1,4 g 4ʹ-(p-Tosyloxy)biphenyl-4-carboxaldehyd und 0,7 g 2-(4-Pentenyl)-1,3-propandiol in 25 ml Toluol wurde mit 3 Tropfen 10%-iger (Vol.) Schwefelsäure versetzt. Das Gemisch wurde unter Rühren 1,5 Stunden zum Sieden erhitzt, wobei feuchtes Toluol abdestilliert und durch Zutropfen von frischem Toluol ersetzt wurde. Danach wurde das Gemisch mit 3 Tropfen Triäthylamin neutralisiert. Nach dem Erkalten wurde das Gemisch mit halbgesättigter Natriumhydrogencarbonat-Lösung und mit Wasser gewaschen, über Natriumsulfat getrocknet und eingeengt. Das erhaltene rohe 5-(4-Pentenyl)-2-[4ʹ-(p-tosyloxy) -4-biphenylyl]-m-dioxan (1,9 g) wurde in 80 ml Aethanol warm gelöst. Die Lösung wurde mit einer Lösung von 1,3 g Kaliumhydroxid in 15 ml Wasser versetzt und unter Rühren 2 Stunden zum Sieden erhitzt. Das Gemisch wurde nach dem Erkalten mit 1 ml Eisessig (bis pH 6) neutralisiert und eingeengt. Eine Lösung des Rückstandes in 200 ml Dichlormethan wurde zweimal mit je 50 ml Wasser gewaschen, über Natriumsulfat getrocknet und eingeengt. Chromatographie des Rückstandes an 40 g Kieselgel mit Toluol/Aceton (Vol. 19:1) ergab 0,9 g 2-(4ʹ-Hydroxy-4-biphenylyl)-5-(4-pentenyl) -m-dioxan.

In analoger Weise können folgende Verbindungen hergestellt werden:
(S)-trans-2-[4'-(4-Methylhexyloxy)-4-biphenylyl] -5-(5-hexenyl)-m-dioxan;
(S)-trans-2-[4'-(4-Methylhexyloxy)-4-biphenylyl] -5-(6-heptenyl)-m-dioxan;
(S)-trans-2-[4'-(4-Methylhexyloxy)-4-biphenylyl] -5-(7-octenyl)-m-dioxan;
(S)-trans-2-[4'-(4-Methylhexyloxy)-4-biphenylyl] -5-(8-nonenyl)-m-dioxan;
(S)-trans-2-[4'-(4-Methylhexyloxy)-4-biphenylyl] -5-(9-decenyl)-m-dioxan;
(S)-trans-2-[4'-(4-Methylhexyloxy)-4-biphenylyl] -5-(10-undecenyl)-m-dioxan;
(S)-trans-2-[4'-(4-Methylhexyloxy)-4-biphenylyl] -5-(6Z-nonenyl)-m-dioxan;
(S)-trans-2-[4'-(6-Methyloctyloxy)-4-biphenylyl] -5-(5-hexenyl)-m-dioxan;
(S)-trans-2-[4'-(6-Methyloctyloxy)-4-biphenylyl] -5-(6-heptenyl)-m-dioxan;
(S)-trans-2-[4'-(6-Methyloctyloxy)-4-biphenylyl] -5-(7-octenyl)-m-dioxan;
(S)-trans-2-[4'-(6-Methyloctyloxy)-4-biphenylyl] -5-(8-nonenyl)-m-dioxan;
(S)-trans-2-[4'-(6-Methyloctyloxy)-4-biphenylyl] -5-(9-decenyl)-m-dioxan;
(S)-trans-2-[4'-(6-Methyloctyloxy)-4-biphenylyl] -5-(10-undecenyl)-m-dioxan;
(S)-trans-2-[4'-(6-Methyloctyloxy)-4-biphenylyl] -5-(6Z-nonenyl)-m-dioxan;
(S)-trans-2-[4'-(1-Methylheptyloxy)-4-biphenylyl] -5-(5-hexenyl)-m-dioxan;
(S)-trans-2-[4'-(1-Methylheptyloxy)-4-biphenylyl] -5-(6-heptenyl)-m-dioxan;
(S)-trans-2-[4ʹ-(1-Methylheptyloxy)-4-biphenylyl] -5-(7-octenyl)-m-dioxan;
(S)-trans-2-[4ʹ-(1-Methylheptyloxy)-4-biphenylyl] -5-(8-nonenyl)-m-dioxan;
(S)-trans-2-[4ʹ-(1-Methylheptyloxy)-4-biphenylyl] -5-(9-decenyl)-m-dioxan;
(S)-trans-2-[4ʹ-(1-Methylheptyloxy)-4-biphenylyl] -5-(10-undecenyl)-m-dioxan;
(S)-trans-2-[4ʹ-(1-Methylheptyloxy)-4-biphenylyl] -5-(6Z-nonenyl)-m-dioxan;
(S)-trans-2-[4ʹ-(5-Hexenyloxy)-4-biphenylyl] -5-(4-methylhexyl)-m-dioxan;
(S)-trans-2-[4ʹ-(6-Heptenyloxy)-4-biphenylyl] -5-(4-methylhexyl)-m-dioxan;
(S)-trans-2-[4ʹ-(7-Octenyloxy)-4-biphenylyl] -5-(4-methylhexyl)-m-dioxan;
(S)-trans-2-[4ʹ-(8-Nonenyloxy)-4-biphenylyl] -5-(4-methylhexyl)-m-dioxan;
(S)-trans-2-[4ʹ-(9-Decenyloxy)-4-biphenylyl] -5-(4-methylhexyl)-m-dioxan;
(S)-trans-2-[4ʹ-(10-Undecenyloxy)-4-biphenylyl] -5-(4-methylhexyl)-m-dioxan;
(S)-trans-2-[4ʹ-(5Z-Octenyloxy)-4-biphenylyl] -5-(4-methylhexyl)-m-dioxan;
trans-2-(4ʹ-Hexyloxy-4-biphenylyl)-5-(5-hexenyl)-m-dioxan;
trans-2-(4ʹ-Hexyloxy-4-biphenylyl)-5-(6-heptenyl)-m-dioxan;
trans-2-(4ʹ-Hexyloxy-4-biphenylyl)-5-(7-octenyl)-m-dioxan;
trans-2-(4ʹ-Hexyloxy-4-biphenylyl)-5-(8-nonenyl)-m-dioxan;
trans-2-(4ʹ-Hexyloxy-4-biphenylyl)-5-(9-decenyl)-m-dioxan;
trans-2-(4ʹ-Hexyloxy-4-biphenylyl)-5-(10-undecenyl)-m-dioxan;
trans-2-(4ʹ-Octyloxy-4-biphenylyl)-5-(5-hexenyl)-m-dioxan;
trans-2-(4'-Octyloxy-4-biphenylyl)-5-(6-heptenyl)-m-dioxan;
trans-2-(4'-Octyloxy-4-biphenylyl)-5-(7-octenyl)-m-dioxan;
trans-2-(4'-Octyloxy-4-biphenylyl)-5-(8-nonenyl)-m-dioxan;
trans-2-(4'-Octyloxy-4-biphenylyl)-5-(9-decenyl)-m-dioxan;
trans-2-(4'-Octyloxy-4-biphenylyl)-5-(10-undecenyl)-m-dioxan;
trans-2-[4'-(5-Hexenyloxy)-4-biphenylyl]-5-octyl-m-dioxan;
trans-2-[4'-(6-Heptenyloxy)-4-biphenylyl]-5-octyl-m-dioxan;
trans-2-[4'-(7-Octenyloxy)-4-biphenylyl]-5-octyl-m-dioxan;
trans-2-[4'-(8-Nonenyloxy)-4-biphenylyl]-5-octyl-m-dioxan;
trans-2-[4'-(9-Decenyloxy)-4-biphenylyl]-5-octyl-m-dioxan;
trans-2-[4'-(10-Undecenyloxy)-4-biphenylyl]-5-octyl-m-dioxan;
sowie die optischen Antipoden der optisch aktiven Verbindungen.

### Mischungsbeispiel A

30 Gew.-% (S)-4-(10-Undecenyloxy)benzoesäure-4-(5-[6-methyloctyl]-2-pyrimidinyl)phenylester,
70 Gew.-% (S)-4'-(3-Methylpentyl)-4-biphenylcarbonsäure-4-(9-decenyloxy)phenylester;
Phasenübergang: (I-Ch) 137,5°C, (Ch-S_{C}*) 102°C, (S_{C}*-C oder S_{C}*-S) 43°C.

### Mischungsbeispiel B

30 Gew.-% (S)-4ʹ-(3-Methylpentyl)-4-biphenylcarbonsäure-4-(6-heptenyloxy)phenylester,
42 Gew.-% (S)-5-(5-Methylheptyl)-2-(4-[10-undecenyloxy]phenyl)pyrimidin,
28 Gew.-% (S)-4-(9-Decenyloxy)benzoesäure-4-(4-methylhexyloxy)phenylester;
Phasenübergänge: (I-Ch) 72,5°C, (Ch-S_{C}*) 56°C, (S_{C}*-S) 7,5°C.

### Mischungsbeispiel C

50 Gew.-% 5-Decyl-2-(4-[9-decenyloxy]phenyl)pyrimidin,
35 Gew.-% (S)-4ʹ-(3-Methylpentyl)-4-biphenylcarbonsäure-4-heptyloxyphenylester,
15 Gew.-% (S)-4ʹ-(3-Methylpentyl)-4-biphenylcarbonsäure-4-decyloxyphenylester;
Phasenübergänge: (I-Ch) 101,5°C, (Ch-S_{A}) 93°C, (S_{A}-S_{C}*) 86,5°C, (S_{C}*-C) 14°C.

## Patentansprüche

1. Verwendung eines Flüssigkristallinen Gemisches enthaltend mindestens 2 Komponenten, dadurch gekennzeichnet, dass mindestens eine Komponente eine Verbindung der allgemeinen Formel 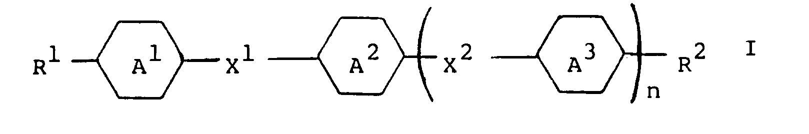 worin n für die Zahl 0 oder 1 steht; X¹ eine einfache Kovalenzbindung, -COO- oder -OOC- und X² eine einfache Kovalenzbindung, -COO-, -OOC-, -CH₂CH₂-, -OCH₂- oder -CH₂O- darstellen; die Ringe A¹, A² und A³ unabhängig voneinander unsubstituiertes oder mit Cyano, Halogen oder Niederalkyl substituiertes 1,4-Phenylen oder einer der Ringe auch Pyrimidin-2,5-diyl oder Pyrazin-2,5-diyl bedeutet und/oder, wenn n für die Zahl 1 steht, einer der Ringe auch trans-1,4-Cyclohexylen oder trans-m-Dioxan-2,5-diyl bedeutet; mit der Massgabe, dass einer der vorhandenen Ringe für Pyrimidin-2,5-diyl oder Pyrazin-2,5-diyl steht, wenn ein weiterer Ring trans-1,4-Cyclohexylen bedeutet oder, wenn n für die Zahl 0 und X¹ für eine einfache Kovalenzbindung stehen; R¹ eine gegebenenfalls halogensubstituierte Alkenylgruppe mit bis zu 18 Kohlenstoffatomen bedeutet, worin gegebenenfalls 1 oder 2 nicht benachbarte CH₂-Gruppen durch -O- ersetzt sind und/oder gegebenenfalls eine C-C-Einfachbindung durch eine C-C-Doppelbindung ersetzt ist; mit der Massgabe, dass R¹ von 3,7-Dimethyl-6-octenyloxy verschieden ist; R² eine gegebenenfalls halogensubstituierte Alkylgruppe mit bis zu 18 Kohlenstoffatomen bedeutet, worin gegebenenfalls 1 oder 2 nicht benachbarte CH₂-Gruppen durch -O- ersetzt sind und/oder gegebenenfalls eine C-C-Einfachbindung durch eine C-C-Doppelbindung ersetzt ist; mit der Massgabe, dass an einen aromatischen Ring gebundene Reste R¹ und/oder R² mindestens 2 Kettenatome zwischen dem aromatischen Ring und einer vorhandenen C-C-Doppelbindung aufweisen,
ist, für ferroelektrische elektro-optische Anzeigen.

2. Verwendung eines flüssigkristallinen Gemisches nach Anspruch 1, dadurch gekennzeichnet, dass es mindestens eine optisch aktive Verbindung der Formel I enthält, worin mindestens einer der Reste R¹ und R² ein chirales Kohlenstoffatom aufweist.

3. Verwendung eines flüssigkristallinen Gemisches nach Anspruch 2, dadurch gekennzeichnet, dass es eine optisch aktive Verbindung der Formel I enthält, worin R² ein chirales Kohlenstoffatom aufweist und R¹ eine nicht chirale, vorzugsweise geradkettige Gruppe bedeutet.

4. Verwendung eines flüssigkristallinen Gemisches nach einem der Ansprüche 1 bis 3, dadurch gekennzeichnet, dass eine der Gruppen X¹ und X² eine einfache Kovalenzbindung und die andere eine einfache Kovalenzbindung, -COO- oder -OOC- bedeutet.

5. Verwendung eines flüssigkristallinen Gemisches nach einem der Ansprüche 1 bis 4, dadurch gekennzeichnet, dass es mindestens eine Verbindung aus der Gruppe der Verbindungen der allgemeinen Formeln 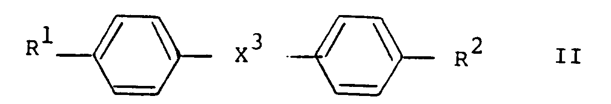 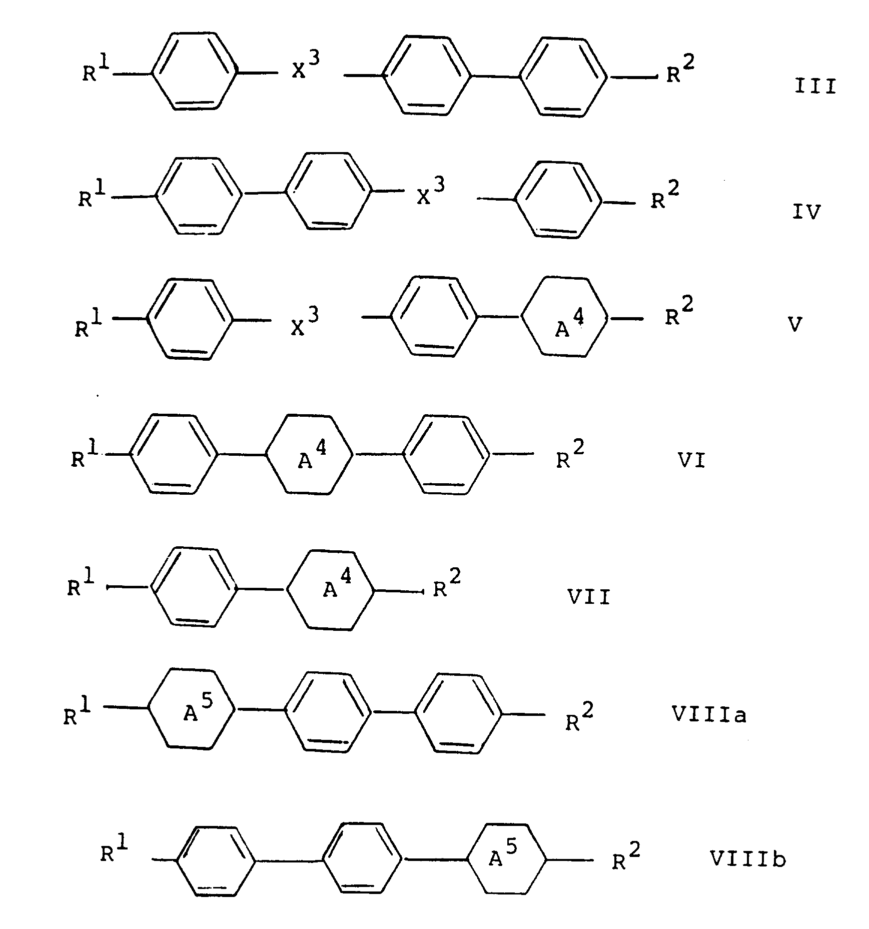 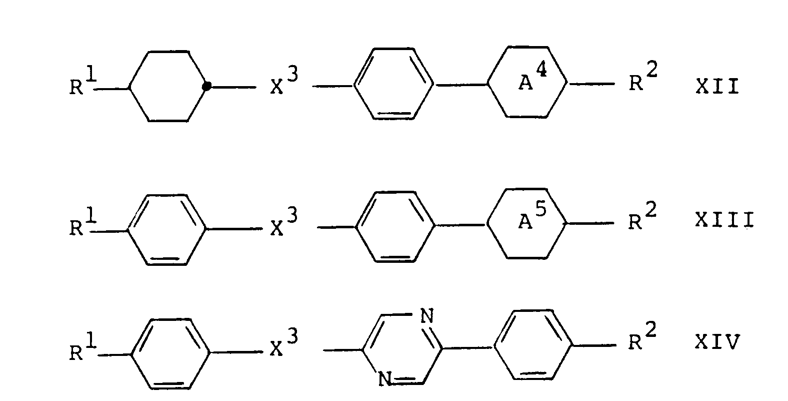 worin X³ -COO- oder -OOC- bezeichnet, Ring A⁴ Pyrimidin-2,5-diyl und Ring A⁵ trans-m-Dioxan-2,5-diyl darstellen und R¹ und R² die in den Ansprüchen 1-3 gegebenen Bedeutungen haben,
enthält.

6. Verwendung eine flüssigkristallinen Gemisches nach einem der Ansprüche 1 bis 5, dadurch gekennzeichnet, dass R¹ Alkenyl oder Alkenyloxy bedeutet.

7. Verwendung eines flüssigkristallinen Gemisches nach einem der Ansprüche 1 bis 6, dadurch gekennzeichnet, dass R² geradkettiges Alkyl oder Alkoxy oder chirales Methylalkyl oder Methylalkoxy bedeutet.

8. Verwendung eines flüssigkristallinen Gemisches nach einem der Ansprüche 1 bis 7, dadurch gekennzeichnet, dass R¹ zwischen der Doppelbindung und Ring A¹ mindestens 2, vorzugsweise mindestens 4 Kettenatome aufweist.

9. Verwendung eines flüssigkristallinen Gemisches nach einem der Ansprüche 1 bis 8 dadurch gekennzeichnet, dass die Doppelbindung im Rest R¹ endständig ist.

10. Verbindungen der allgemeinen Formel 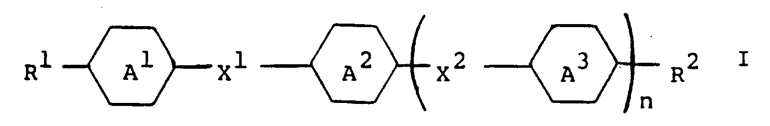 worin n für die Zahl 0 oder 1 steht; X¹ eine einfache Kovalenzbindung, -COO- oder -OOC- und X² eine einfache Kovalenzbindung, -COO-, -OOC-, -CH₂CH₂-, -OCH₂- oder -CH₂O- darstellen; die Ringe A¹, A² und A³ unabhängig voneinander unsubstituiertes oder mit Cyano, Halogen oder Niederalkyl substituiertes 1,4-Phenylen oder einer der Ringe auch Pyrimidin-2,5-diyl oder Pyrazin-2,5-diyl bedeutet und/oder, wenn n für die Zahl 1 steht, einer der Ringe auch trans-1,4-Cyclohexylen oder trans-m-Dioxan-2,5-diyl bedeutet; mit der Massgabe, dass einer der vorhandenen Ringe für Pyrimidin-2,5-diyl oder Pyrazin-2,5-diyl steht, wenn ein weiterer Ring trans-1,4-Cyclohexylen bedeutet oder, wenn n für die Zahl 0 und X¹ für eine einfache Kovalenzbindung stehen; R¹ eine Alkenylgruppe mit endständiger Doppelbindung mit bis zu 18 Kohlenstoffatomen bedeutet, worin gegebenenfalls 1 CH₂-Gruppe durch -O- ersetzt ist; R² eine Alkylgruppe mit bis zu 18 Kohlenstoffatomen bedeutet, worin gegebenenfalls 1 CH₂-Gruppe durch -O- ersetzt ist; mit der Massgabe, dass der Rest R¹ mindestens 4 Kettenatome zwischen der Doppelbindung und Ring A¹ aufweist.

11. Verbindungen nach Anspruch 10, dadurch gekennzeichnet, dass die Zahl der Kettenatome in unverzweigter Kette in R¹ und R² zusammen mindestens 8, insbesondere mindestens 10 beträgt, wenn n für die Zahl 1 steht, und mindestens 10, insbesondere mindestens 12 beträgt, wenn n für die Zahl 0 steht.

12. Verbindungen nach einem der Ansprüche 10 bis 11, dadurch gekennzeichnet, dass R¹ eine nicht chirale, vorzugsweise geradkettige Gruppe bedeutet.

13. Verbindungen nach einem der Ansprüche 10 bis 12, dadurch gekennzeichnet, dass R¹ Alkenyl oder Alkenyloxy bedeutet.

14. Verbindungen nach einem der Ansprüche 10 bis 13, dadurch gekennzeichnet, dass R² eine geradkettige Alkyl- oder Alkoxygruppe oder eine chirale Methylalkyl- oder Methylalkoxygruppe bedeutet.

15. Verbindungen nach einem der Ansprüche 10 bis 14, dadurch gekennzeichnet, dass eine der Gruppen X¹ und X² eine einfache Kovalenzbindung und die andere eine einfache Kovalenzbindung, -COO- oder -OOC- bedeutet.

16. Verbindungen nach einem der Ansprüche 10 bis 15, gekennzeichnet durch die allgemeine Formel 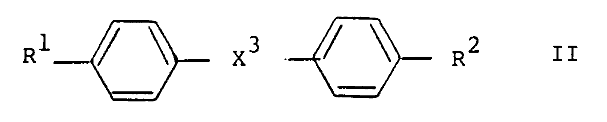 worin X³ -COO- oder -OOC- bezeichnet, und R¹ und R² die in den Ansprüchen 10-14 gegebenen Bedeutungen haben.

17. Verbindungen nach Anspruch 16, dadurch gekennzeichnet, dass R¹ Alkenyloxy und R² Alkoxy bedeuten.

18. Verbindungen nach einem der Ansprüche 10 bis 15, gekennzeichnet durch die allgemeine Formel 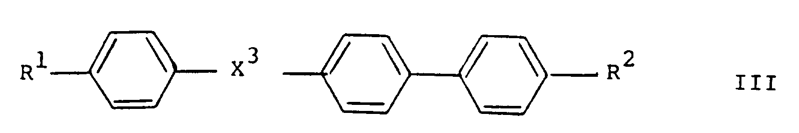 worin X³ -COO- oder -OOC- bezeichnet, und R¹ und R² die in dem Ansprüchen 10-14 gegebenen Bedeutungen haben.

19. Verbindungen nach Anspruch 18, dadurch gekennzeichnet, dass R¹ Alkenyloxy und R² Alkyl oder Alkoxy bedeuten.

20. Verbindungen nach einem der Ansprüche 10 bis 15, gekennzeichnet durch die allgemeine Formel 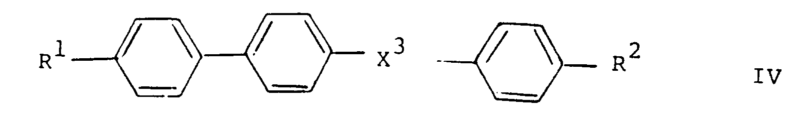 worin X³ -COO- oder -OOC- bezeichnet, und R¹ und R² die in den Ansprüchen 10-14 gegebenen Bedeutungen haben.

21. Verbindungen nach Anspruch 20, dadurch gekennzeichnet, dass R¹ Alkenyloxy und R² Alkoxy bedeuten.

22. Verbindungen nach einem der Ansprüche 10 bis 15, gekennzeichnet durch die allgemeine Formel 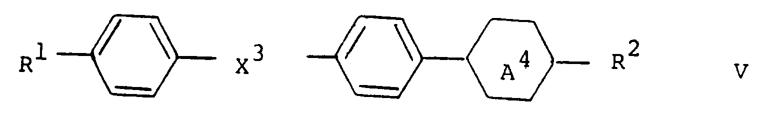 worin X³ -COO- oder -OOC- bedeutet; Ring A⁴ Pyrimidin-2,5-diyl darstellt; und R¹ und R² die in den Ansprüchen 10-14 gegebenen Bedeutungen haben.

23. Verbindungen nach Anspruch 22, dadurch gekennzeichnet, dass R¹ Alkenyloxy und R² Alkyl bedeuten.

24. Verbindungen nach einem der Ansprüche 10 bis 15, gekennzeichnet durch die allgemeine Formel 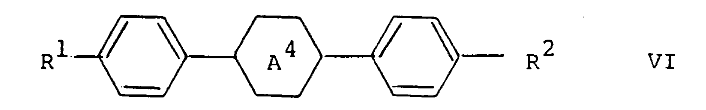 worin Ring A⁴ Pyrimidin-2,5-diyl darstellt, und R¹ und R² die in den Ansprüchen 10-14 gegebenen Bedeutungen haben.

25. Verbindungen nach Anspruch 24, dadurch gekennzeichnet, dass R¹ Alkenyloxy und R² Alkyl bedeuten.

26. Verbindungen nach einem der Ansprüche 10 bis 15, gekennzeichnet durch die allgemeine Formel 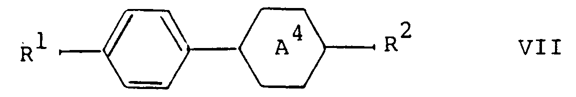 worin Ring A⁴ Pyrimidin-2,5-diyl darstellt, und R¹ und R² die in den Ansprüchen 10-14 gegebenen Bedeutungen haben.

27. Verbindungen nach Anspruch 26, dadurch gekennzeichnet, dass R¹ Alkenyloxy und R² Alkyl bedeuten.

28. Verbindungen nach einem der Ansprüche 10 bis 15, gekennzeichnet durch die allgemeine Formel 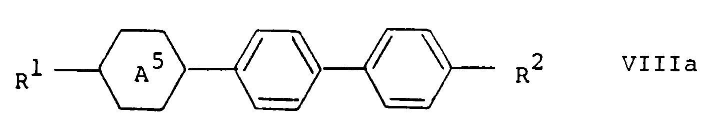 worin Ring A⁵ trans-m-Dioxan-2,5-diyl darstellt, und R¹ und R² die in den Ansprüchen 10-14 gegebenen Bedeutungen haben.

29. Verbindungen nach Anspruch 28, dadurch gekennzeichnet, dass R¹ Alkenyl und R² Alkoxy bedeuten.

30. Verbindungen nach einem der Ansprüche 10 bis 15, gekennzeichnet durch die allgemeinen Formel 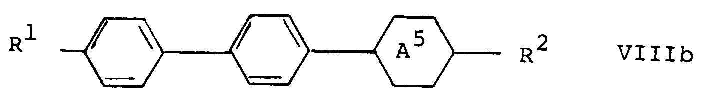 worin Ring A⁵ trans-m-Dioxan-2,5-diyl darstellt und R¹ und R² die in den Ansprüchen 10-14 gegebenen Bedeutungen haben.

31. Verbindungen nach Anspruch 30, dadurch gekennzeichnet, dass R¹ Alkenyloxy und R² Alkyl bedeuten.

32. Verbindungen nach einem der Ansprüche 10 bis 15, gekennzeichnet durch die allgemeinen Formel 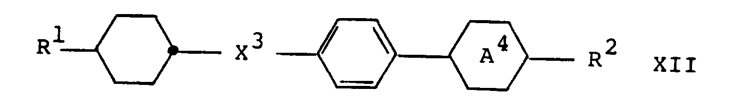 worin X³ -COO- oder -OOC- bezeichnet, Ring A⁴ Pyrimidin-2,5-diyl darstellt, und R¹ und R² die in den Ansprüchen 10-14 gegebenen Bedeutungen haben.

33. Verbindungen nach Anspruch 32, dadurch gekennzeichnet, dass R¹ Alkenyl und R² Alkyl bedeuten.

34. Verbindungen nach einem der Ansprüche 10 bis 15, gekennzeichnet, durch die allgemeine Formel 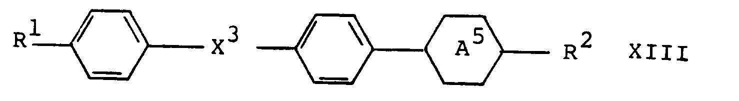 worin X³ -COO- oder -OOC- bezeichnet, Ring A⁵ trans-m-Dioxan-2,5-diyl darstellt, und R¹ und R² die in den Ansprüchen 10-14 gegebenen Bedeutungen haben.

35. Verbindungen nach Anspruch 34, dadurch gekennzeichnet, dass R¹ Alkenyloxy und R² Alkyl bedeuten.

36. Verbindungen nach einem der Ansprüche 10 bis 15, gekennzeichnet durch die allgemeine Formel 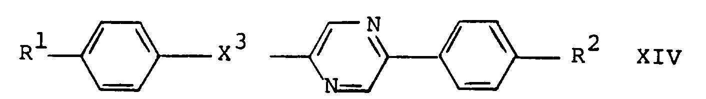 worin X³ -COO- oder -OOC- bezeichnet, und R¹ und R² die in den Ansprüchen 10-14 gegebenen Bedeutungen haben.

37. Verbindungen nach Anspruch 36, dadurch gekennzeichnet, dass R¹ Alkenyl oder Alkenyloxy und R² Alkyl oder Alkoxy bedeuten.

## Claims

1. The use of a liquid crystalline mixture containing at least 2 components, characterized in that at least one component is a compound of the general formula 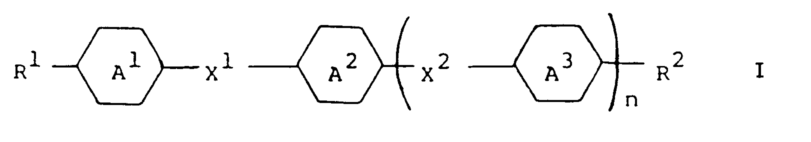 wherein n stands for the number 0 or 1; X¹ represents a single covalent bond, -COO- or -OOC- and X² represents a single covalent bond, -COO-, -OOC-, -CH₂CH₂-, -OCH₂- or -CH₂O-; rings A¹, A² and A³ each independently signify unsubstituted 1,4-phenylene or 1,4-phenylene substituted with cyano, halogen or lower alkyl or one of the rings also signifies pyrimidine-2,5-diyl or pyrazine-2,5-diyl and/or, when n stands for the number 1, one of the rings also signifies trans-1,4-cyclohexylene or trans-m-dioxane-2,5-diyl; with the proviso that one of the rings present stands for pyrimidine-2,5-diyl or pyrazine-2,5-diyl when a further ring signifies trans-1,4-cyclohexylene or when n stands for the number 0 and X¹ stands for a single covalent bond; R¹ signifies an optionally halogen-substituted alkenyl group with up to 18 carbon atoms in which optionally 1 CH₂ group or 2 non-adjacent CH₂ groups is/are replaced by -O- and/or a C-C single bond is optionally replaced by a C-C double bond; with the proviso that R¹ is different from 3,7-dimethyl-6-octenyloxy; R² signifies an optionally halogen-substituted alkyl group with up to 18 carbon atoms in which optionally 1 CH₂ group or 2 non-adjacent CH₂ groups is/are replaced by -O- and/or a C-C single bond is optionally replaced by a C-C double bond; with the proviso that residues R¹ and/or R² attached to an aromatic ring have at least 2 chain atoms between the aromatic ring and a C-C double bond present,
for ferroelectric electro-optical displays.

2. The use of a liquid crystalline mixture according to claim 1, characterized in that it contains at least one optically active compound of formula I in which at least one of the residues R¹ and R² has a chiral carbon atom.

3. The use of a liquid crystalline mixture according to claim 2, characterized in that it contains an optically active compound of formula I in which R² has a chiral carbon atom and R¹ signifies a non-chiral, preferably straight-chain, group.

4. The use of a liquid crystalline mixture according to any one of claims 1 to 3, characterized in that one of the groups X¹ and X² signifies a single covalent bond and the other signifies a single covalent bond, -COO- or -OOC-.

5. The use of a liquid crystalline mixture according to any one of claims 1 to 4, characterized in that it contains at least one compound from the groups of compounds of the general formulae 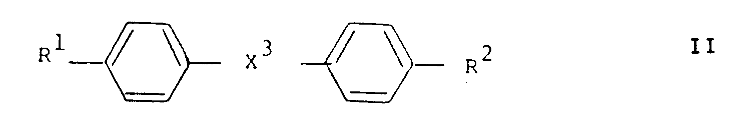 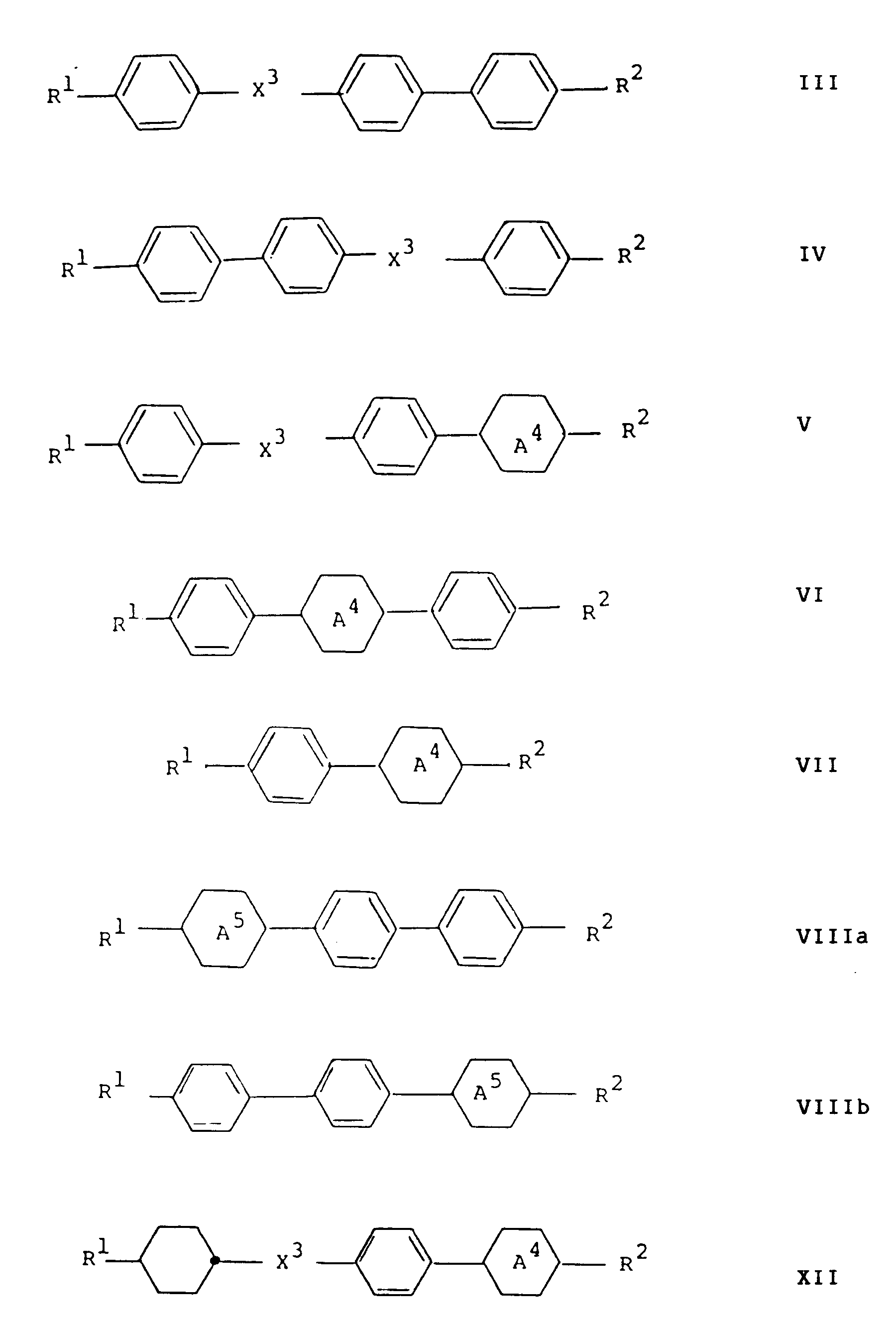 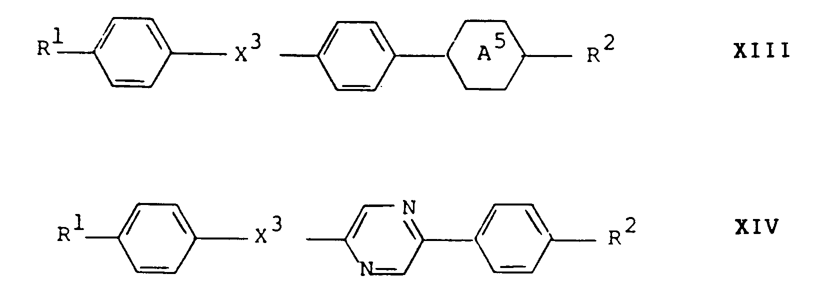 wherein X³ denotes -COO- or -OOC-, ring A⁴ represents pyrimidine-2,5-diyl, ring A⁵ represents trans-m-dioxane-2,5-diyl and R¹ and R² have the significance given in claims 1-3.

6. The use of a liquid crystalline mixture according to any one of claims 1 to 5, characterized in that R¹ signifies alkenyl or alkenyloxy.

7. T%he use of a liquid crystalline mixture according to any one of claims 1 to 6, characterized in that R² signifies straight-chain alkyl or alkoxy or chiral methylalkyl or methylalkoxy.

8. The use of a liquid crystalline mixture according to any one of claims 1 to 7, characterized in that R¹ has at least 2, preferably at least 4, chain atoms between the double bond and ring A¹.

9. The use of a liquid crystalline mixture according to any one of claims 1 to 8, characterized in that the double bond in the residue R¹ is terminal.

10. Compounds of the general formula 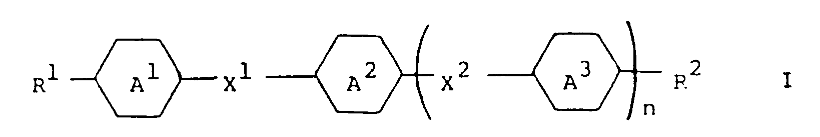 wherein n stands for the number 0 or 1; X¹ represents a single covalent bond, -COO- or -OOC- and X² represents a single covalent bond, -COO-, -OOC-, -CH₂CH₂-, -OCH₂- or -CH₂O-; rings A¹, A² and A³ each independently signify unsubstituted 1,4-phenylene or 1,4-phenylene substituted with cyano, halogen or lower alkyl or one of the rings also signifies pyrimidine-2,5-diyl or pyrazine-2,5-diyl and/or, when n stands for the number 1, one of the rings also signifies trans-1,4-cyclohexylene or trans-m-dioxane-2,5-diyl; with the proviso that one of the rings present stands for pyrimidine-2,5-diyl or pyrazine-2,5-diyl when a further ring signifies trans-1,4-cyclohexylene or when n stands for the number 0 and X¹ stands for a single covalent bond; R¹ signifies an alkenyl group with a terminal double bond and up to 18 carbon atoms in which optionally 1 CH₂ group is replaced by -O-; R² signifies an alkyl group with up to 18 carbon atoms in which optionally 1 CH₂ group is replaced by -O-; with the proviso that residue R¹ has at least 4 chain atoms between the double bond and ring A¹.

11. Compounds according to claim 10, characterized in that the number of chain atoms in unbranched chains in R¹ and R² together amounts to at least 8, especially to at least 10, when n stands for the number 1 and to at least 10, especially to at least 12, when n stands for the number 0.

12. Compounds according to any one of claims 10 to 11, characterized in that R¹ signifies a non-chiral, preferably straight-chain, group.

13. Compounds according to any one of claims 10 to 12, characterized in that R¹ signifies alkenyl or alkenyloxy.

14. Compounds according to any one of claims 10 to 13, characterized in that R² signifies a straight-chain alkyl or alkoxy group or a chiral methylalkyl or methylalkoxy group.

15. Compounds according to any one of claims 10 to 14, characterized in that one of the groups X¹ and X² signifies a single covalent bond and the other signifies a single covalent bond, -COO- or -OOC-.

16. Compounds according to any one of claims 10 to 15, characterized by the general formula 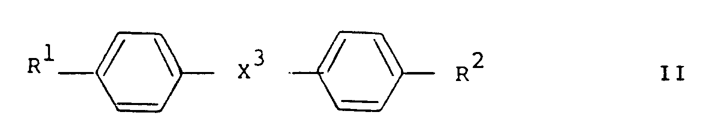 wherein X³ denotes -COO- or -OOC- and R¹ and R² have the significances given in claims 10-14.

17. Compounds according to claim 16, characterized in that R¹ signifies alkenyloxy and R² signifies alkoxy.

18. Compounds according to any one of claims 10 to 15, characterized by the general formula 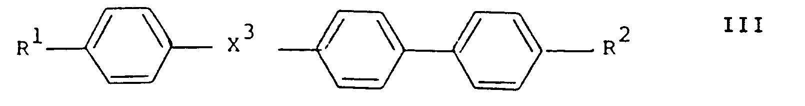 wherein X³ denotes -COO- or -OOC- and R¹ and R² have the significances given in claims 10-14.

19. Compounds according to claim 18, characterized in that R¹ signifies alkenyloxy and R² signifies alkyl or alkoxy.

20. Compounds according to any one of claims 10 to 15, characterized by the general formula 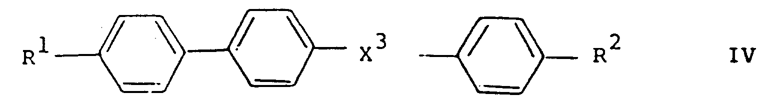 wherein X³ denotes -COO- or -OOC- and R¹ and R² have the significances given in claims 10-14.

21. Compounds according to claim 20, characterized in that R¹ signifies alkenyloxy and R² signifies alkoxy.

22. Compounds according to any one of claims 10 to 15, characterized by the general formula 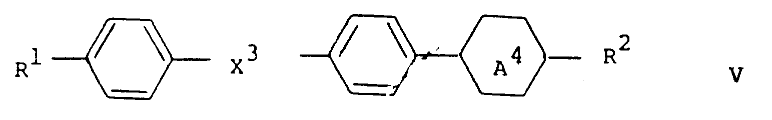 wherein X³ signifies -COO- or -OOC-; ring A⁴ represents pyrimidine-2,5-diyl; and R¹ and R² have the significances given in claims 10-14.

23. Compounds according to claim 22, characterized in that R¹ signifies alkenyloxy and R² signifies alkyl.

24. Compounds according to any one of claims 10 to 15, characterized by the general formula 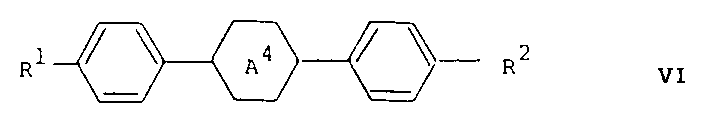 wherein ring A⁴ represents pyrimidine-2,5-diyl and R¹ and R² have the significances given in claims 10-14.

25. Compounds according to claim 24, characterized in that R¹ signifies alkenyloxy and R² signifies alkyl.

26. Compounds according to any one of claims 10 to 15, characterized by the general formula 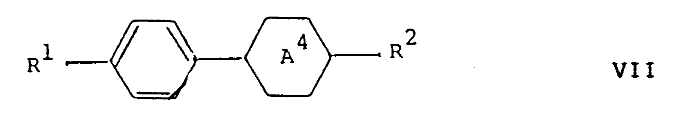 wherein ring A⁴ represents pyrimidine-2,5-diyl and R¹ and R² have the significances given in claims 10-14.

27. Compounds according to claim 26, characterized in that R¹ signifies alkenyloxy and R² signifies alkyl.

28. Compounds according to any one of claims 10 to 15, characterized by the general formula 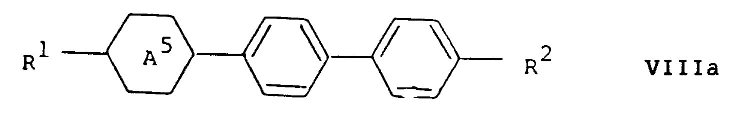 wherein ring A⁵ represents trans-m-dioxane-2,5-diyl and R¹ and R² have the significances given in claims 10-14.

29. Compounds according to claims 28, characterized in that R¹ signifies alkenyl and R² signifies alkoxy.

30. Compounds according to any one of claims 10 to 15, characterized by the general formula 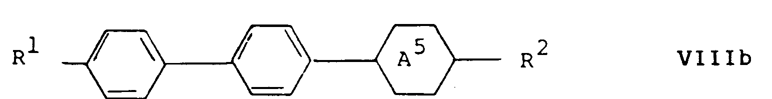 wherein ring A⁵ represents trans-m-dioxane-2,5-diyl and R¹ and R² have the significances given in claims 10-14.

31. Compounds according to claim 30, characterized in that R¹ signifies alkenyloxy and R² signifies alkyl.

32. Compounds according to any one of claims 10 to 16, characterized by the general formula 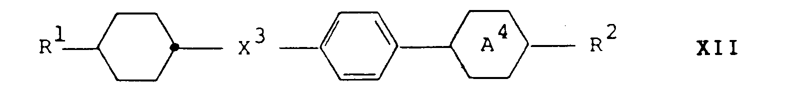 wherein X³ signifies -COO- or -OOC-; ring A⁴ represents pyrimidine-2,5-diyl; and R¹ and R² have the significances given in claims 10-14.

33. Compounds according to claim 32, characterized in that R¹ signifies alkenyl and R² signifies alkyl.

34. Compounds according to any one of claims 10 to 15, characterized by the general formula 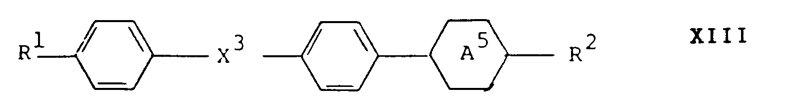 wherein X³ denotes -COO- or -OOC-, ring A⁵ represents trans-m-dioxane-2,5-diyl and R¹ and R² have the significances given in claims 10-14.

35. Compounds according to claim 34, characterized in that R¹ signifies alkenyloxy and R² signifies alkyl.

36. Compounds according to any one of claims 10 to 15, characterized by the general formula 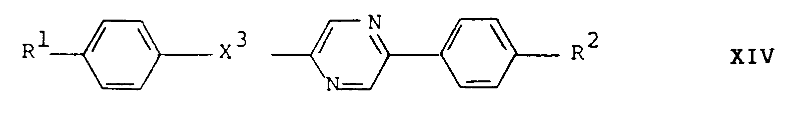 wherein X³ denotes -COO- or -OOC- and R¹ and R² have the significances given in claims 10-14.

37. Compounds according to claim 36, characterized in that R¹ signifies alkenyl or alkenyloxy and R² signifies alkyl or alkoxy.

## Revendications

1. Utilisation d'un mélange à cristaux liquides contenant au moins deux composants, caractérisée en ce qu'au moins un composant consiste en un composé de formule générale 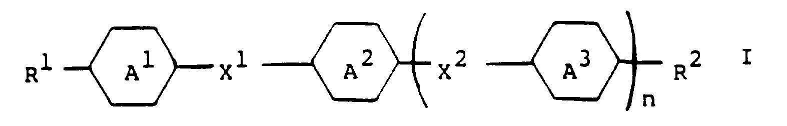 dans laquelle n est égal à 0 ou 1; X¹ représente une liaison covalente simple, -COO-, ou -OOC- et X² une liaison covalente simple, -COO-, -OOC-, -CH₂CH₂-, -OCH₂- ou -CH₂O-, les cycles A¹, A² et A³ sont, indépendamment les uns des autres, des cycles 1,4-phénylène non substitués ou substitués par des groupes cyano, des halogènes ou des groupes alkyle inférieurs, l'un des cycles pouvant également consister en un cycle pyrimidine-2,5-diyle ou pyrazine-2,5-diyle et/ou, lorsque n est égal à 1, l'un des cycles peut également consister en un cycle trans-1,4-cyclohexylène ou trans-n-dioxanne-2,5-diyle, sous réserve que l'un des cycles présents est un cycle pyrimidine-2,5-diyle ou pyrazine-2,5-diyle lorsqu'un autre cycle est un cycle trans-1,4-cyclohexylène ou bien lorsque n est égal à 0 et que X¹ représente une liaison covalente simple; R¹ représente un groupe alcényle éventuellement substitué par des halogènes et contenant jusqu'à 18 atomes de carbone, dans lequel le cas échéant un ou deux groupes CH₂ non voisins sont remplacés par -O- et/ou le cas échéant une liaison C-C simple est remplacée par une double liaison C-C; sous réserve que R¹ ne peut représenter un groupe 3,7-diméthyl-6-octényloxy; R² représente un groupe alkyle éventuellement substitué par des halogènes et contenant jusqu'à 18 atomes de carbone, dans lequel le cas échéant un ou deux groupes CH₂ non voisins sont remplacés par -O- et/ou le cas échéant une liaison C-C simple est remplacée par une double liaison C-C; sous réserve que des radicaux R¹ et/ou R² reliés à un cycle aromatique contiennent au moins 2 atomes de carbone entre le cycle aromatique et une double liaison C-C présente, pour des affichages électro-optiques ferro-électriques.

2. Utilisation d'un mélange à cristaux liquides selon revendication 1, caractérisée en ce qu'il contient au moins un composé de formule I possédant l'activité optique et dans lequel au moins un des radicaux R¹ et R² contient un atome de carbone chiral.

3. Utilisation d'un mélange à cristaux liquides selon revendication 2, caractérisée en ce qu'il contient un composé de formule I possédant l'activité optique, dans lequel R² contient un atome de carbone chiral et R¹ est un groupe de préférence à chaîne droite et non chiral.

4. Utilisation d'un mélange à cristaux liquides selon l'une des revendications 1 à 3, caractérisée en ce que l'un des symboles X¹ et X² représente une liaison covalente simple et l'autre une liaison covalente simple, -COO- ou -OOC-.

5. Utilisation d'un mélange à cristaux liquides selon l'une des revendications 1 à 4, caractérisée en ce qu'il contient au moins un composé du groupe des composés de formules générales 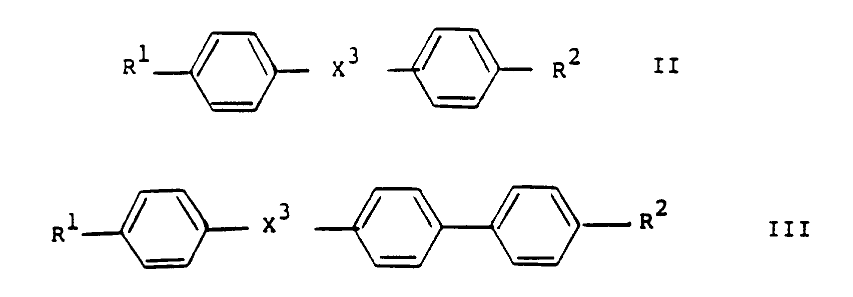 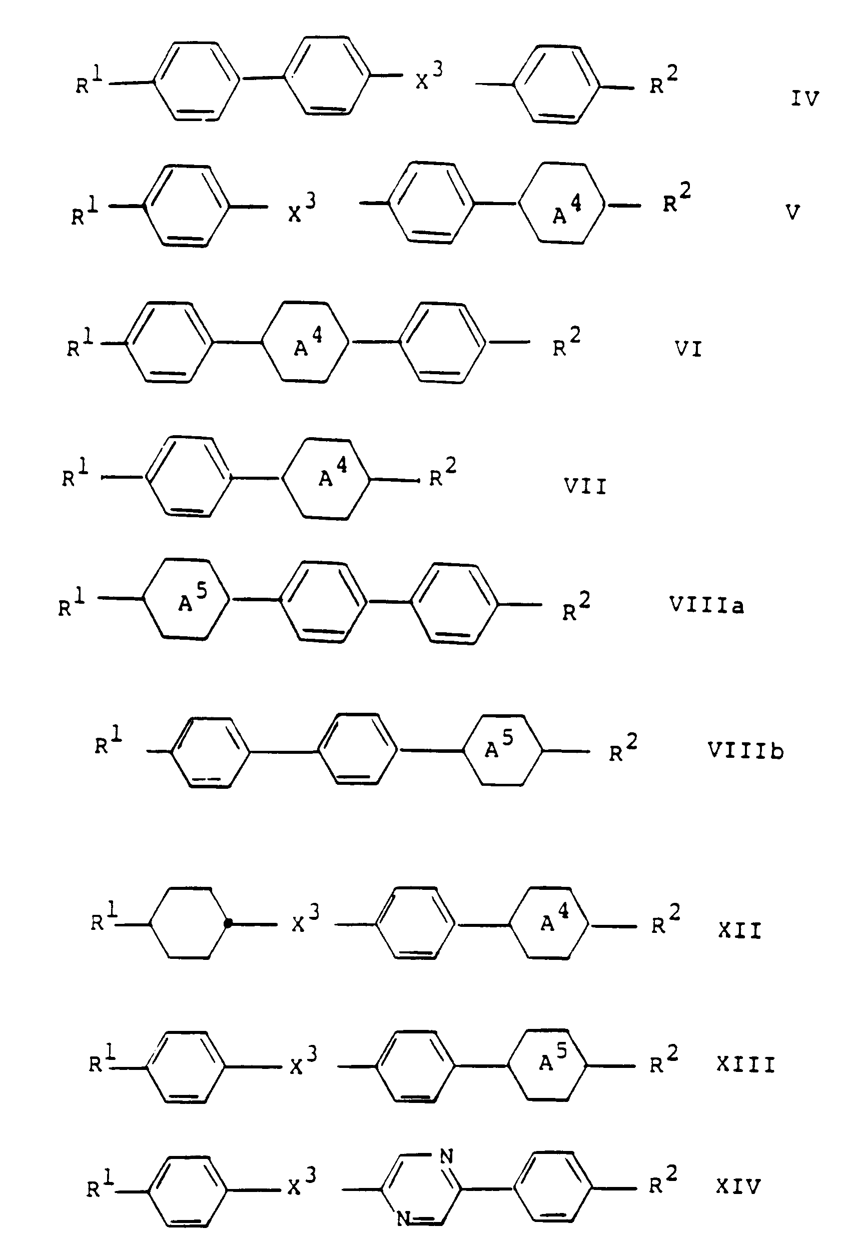 dans lesquelles X³ représente -COO- ou -OOC-, le cycle A⁴ est un cycle pyrimidine-2,5-diyle et le cycle A⁵ un cycle trans-n-dioxanne-2,5-diyle et R¹ et R² ont les significations indiquées dans les revendications 1 à 3.

6. Utilisation d'un mélange à cristaux liquides selon l'une des revendications 1 à 5, caractérisée en ce que R¹ représente un groupe alcényle ou alcényloxy.

7. Utilisation d'un mélange à cristaux liquides selon une des revendications 1 à 6, caractérisée en ce que R² représente un groupe alkyle ou alcoxy à chaîne droite ou un groupe méthylalkyle ou méthylalcoxy chiral.

8. Utilisation d'un mélange à cristaux liquides selon une des revendications 1 à 7, caractérisée en ce que R¹, entre la double liaison et le cycle A¹, contient au moins 2 et de préférence au moins 4 atomes caténaires.

9. Utilisation d'un mélange à cristaux liquides selon une des revendications 1 à 8, caractérisée en ce que la double liaison, dans le groupe R¹, est en position terminale.

10. Composés de formule générale 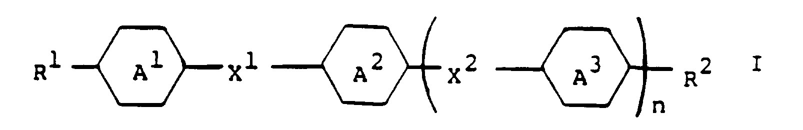 dans laquelle n est égal à 0 ou 1; X¹ représente une liaison covalente simple, -COO-, ou -OOC- et X² une liaison covalente simple, -COO-, -OOC-, -CH₂CH₂-, -OCH₂- ou -CH₂O-; les cycles A¹, A² et A³, indépendamment les uns des autres, sont des cycles 1,4-phénylène non substitués ou substitués par des groupes cyano, des halogènes ou des groupes alkyle inférieurs, ou bien l'un des cycles peut également consister en un cycle pyrimidine-2,5-diyle ou pyrazine-2,5-diyle et/ou, lorsque n est égal à 1, l'un des cycles peut également consister en un cycle trans-1,4-cyclohexylène ou trans-n-dioxanne-2,5-diyle; sous réserve que l'un des cycles présents est un cycle pyrimidine-2,5-diyle ou pyrazine-2,5-diyle lorsqu'un autre cycle est un cycle trans-1,4-cyclohexylène ou bien lorsque n est égal à 0 et que X¹ représente une liaison covalente simple; R¹ représente un groupe alcényle à double liaison terminale contenant jusqu'à 18 atomes de carbone et dans lequel le cas échéant un groupe CH₂ est remplacé par -O-, R² représente un groupe alkyle contenant jusqu'à 18 atomes de carbone et dans lequel le cas échéant un groupe CH₂ est remplacé par -O-; sous réserve que le groupe R¹ contient au moins 4 atomes caténaires entre la double liaison et le cycle A¹.

11. Composés selon revendication 10, caractérisés en ce que le nombre des atomes caténaires en chaîne droite dans R¹ et R² est au total d'au moins 8, plus spécialement d'au moins 10 lorsque n est égal à 1, et d'au moins 10, plus spécialement d'au moins 12 lorsque n est égal à 0.

12. Composés selon une des revendications 10 à 11, caractérisés en ce que R¹ représente un groupe non chiral de préférence à chaîne droite.

13. Composés selon une des revendications 10 à 12, caractérisés en ce que R¹ représente un groupe alcényle ou alcényloxy.

14. Composés selon une des revendications 10 à 13, caractérisés en ce que R² représente un groupe alkyle ou alcoxy à chaîne droite ou un groupe méthylalkyle ou méthylalcoxy chiral.

15. Composés selon une des revendications 10 à 14, caractérisés en ce que l'un des symboles X¹ et X² représente une liaison covalente simple et l'autre une liaison covalente simple, -COO- ou -OOC-.

16. Composés selon une des revendications 10 à 15, caractérisés par la formule générale 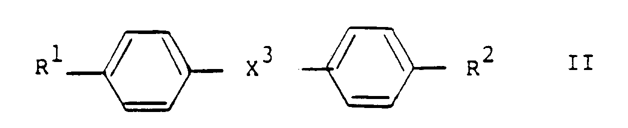 dans laquelle X³ représente -COO- ou -OOC-, et R¹ et R² ont les significations indiquées dans les revendications 10 à 14.

17. Composés selon revendication 16, caractérisés en ce que R¹ représente un groupe alcényloxy et R² un groupe alcoxy.

18. Composés selon une des revendications 10 à 15, caractérisés par la formule générale 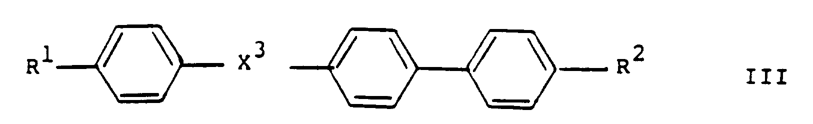 dans laquelle X³ représente -COO- ou -OOC-, et R¹ et R² ont les significations indiquées dans les revendications 10 à 14.

19. Composés selon revendication 18, caractérisés en ce que R¹ représente un groupe alcényloxy et R² un groupe alkyle ou alcoxy.

20. Composés selon une des revendications 10 à 5, caractérisés par la formule générale 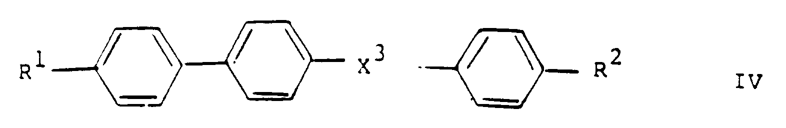 dans laquelle X³ représente -COO- ou -OOC-, et R¹ et R² ont les significations indiquées dans les revendications 10 à 14.

21. Composés selon revendication 20, caractérisés en ce que R¹ représente un groupe alcényloxy et R² un groupe alcoxy.

22. Composés selon une des revendications 10 à 15, caractérisés par la formule générale 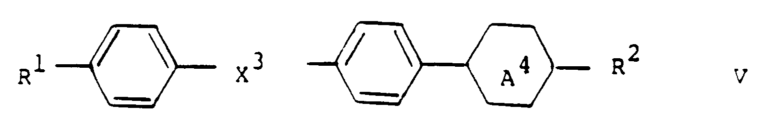 dans laquelle X³ représente -COO- ou -OOC-; le cycle A⁴ est un cycle pyrimidine-2,5-diyle; et R¹ et R² ont les significations indiquées dans les revendications 10 à 14.

23. Composés selon revendication 22, caractérisés en ce que R¹ représente un groupe alcényloxy et R² un groupe alkyle.

24. Composés selon une des revendications 10 à 15, caractérisés par la formule générale 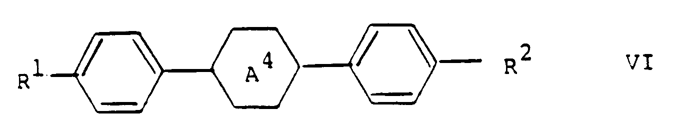 dans laquelle le cycle A⁴ est un cycle pyrimidine-2,5-diyle, et R¹ et R² ont les significations indiquées dans les revendication 10 à 14.

25. Composés selon revendication 24, caractérisés en ce que R¹ représente un groupe alcényloxy et R² un groupe alkyle.

26. Composés selon une des revendications 10 à 15, caractérisés par la formule générale 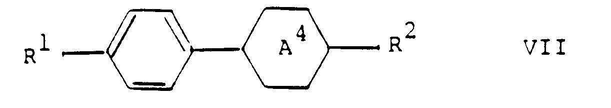 dans laquelle le cycle A⁴ est un cycle pyrimidine-2,5-diyle, et R¹ et R² ont les significations indiquées dans les revendications 10 à 14.

27. Composés selon revendication 26, caractérisés en ce que R¹ représente un groupe alcényloxy et R² un groupe alkyle.

28. Composés selon une des revendications 10 à 15, caractérisés par la formule 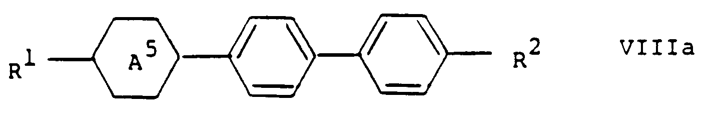 dans laquelle le cycle A⁵ est un cycle trans-m-dioxanne-2,5-diyle, et R¹ et R² ont les significations indiquées dans les revendications 10 à 14.

29. Composés selon revendication 28, caractérisés en ce que R¹ représente un groupe alcényle et R² un groupe alcoxy.

30. Composés selon une des revendications 10 à 15, caractérisés par la formule générale 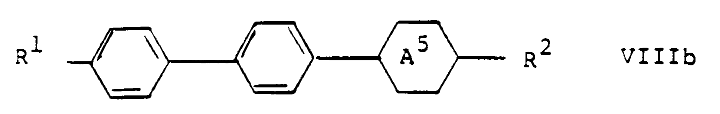 dans laquelle le cycle A⁵ est un cycle trans-m-dioxanne-2,5-diyle, et R¹ et R² ont les significations indiquées dans les revendications 10 à 14.

31. Composés selon revendication 30, caractérisés en ce que R¹ représente un groupe alcényloxy et R² un groupe alkyle.

32. Composés selon une des revendications 10 à 15, caractérisés par la formule générale 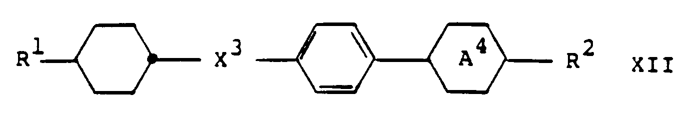 dans laquelle X³ représente -COO- ou -OOC-, le cycle A⁴ est un cycle pyrimidine-2,5-diyle, et R¹ et R² ont les significations indiquées dans les revendications 10 à 14.

33. Composés selon revendication 32, caractérisés en ce que R¹ représente un groupe alcényle et R² un groupe alkyle.

34. Composés selon une des revendications 10 à 15, caractérisés par la formule générale 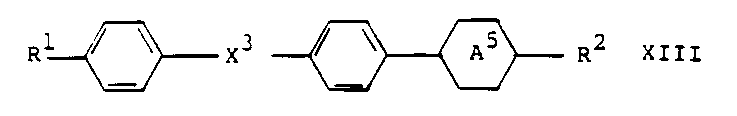 dans laquelle X³ représente -COO- ou -OOC-, le cycle A⁵ est un cycle trans-m-dioxanne-2,5-diyle, et R¹ et R² ont les significations indiquées dans les revendications 10 à 14.

35. Composés selon revendication 34, caractérisés en ce que R¹ représente un groupe alcényloxy et R² un groupe alkyle.

36. Composés selon une des revendications 10 à 15, caractérisés par la formule générale 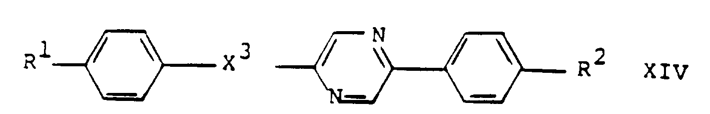 dans laquelle X³ représente -COO- ou -OOC-, et R¹ et R² ont les significations indiquées dans les revendications 10 à 14.

37. Composés selon revendication 36, caractérisés en ce que R¹ représente un groupe alcényle ou alcényloxy et R² un groupe alkyle ou alcoxy.
